# EUROPEAN PATENT APPLICATION

(11) **EP 4 311 679 A1**
(43) Date of publication of application: **31.01.2024**
(21) Application number: 23187894.3
(22) Date of filing: 26.07.2023
(51) Int. Cl.: B41J 2/21

(54) **CONTROLLER, IMAGE FORMING SYSTEM, DISCHARGE-DEFECT-NOZZLE DETECTING METHOD, AND MEDIUM**

(30) Priority: 29.07.2022 JP 2022121945
(71) Applicant: Brother Kogyo Kabushiki Kaisha, Nagoya, Aichi 467-8561 (JP)
(72) Inventor: AKAZAWA, Akira, Nagoya, 467-8562 (JP); KURITA, Yusuke, Nagoya, 467-8562 (JP); SHIBATA, Takeshi, Nagoya, 467-8562 (JP)
(74) Representative: J A Kemp LLP

(57) **Abstract**

There is provided a controller (700) for an image forming system (1000) including a head (12) in which nozzles (NZ) are formed. The controller includes: a first communication interface (701); and a second communication interface (702). The controller is configured to: form a test pattern (TP1, TP2) on a medium (PM) at first resolution by causing the head to discharge a liquid, via the second communication interface, the test pattern including patterns (L) formed respectively by the nozzles; obtain a plurality of test pattern data via the first communication interface, the plurality of test pattern data being generated by imaging, at second resolution lower than the first resolution, the test pattern with an imaging device (600) a plurality of times; and detect a discharge-defect-nozzle of the nozzles based on the plurality of test pattern data obtained from the imaging device.

## Description

### TECHNICAL FIELD

The present invention relates to a controller, an image forming system, a discharge-defect-nozzle detecting method, and a medium.

### BACKGROUND ART

An image forming system configured to form an image on a medium moving relative to a head by discharging (ejecting) liquid droplets from the head. In such an image forming system, the head includes a plurality of nozzles, and a plurality of driving elements corresponding to the plurality of nozzles respectively. If voltage is applied to each of the plurality of driving elements, the liquid droplet is discharged from the nozzle corresponding to the driving element to which the voltage is applied, and the image is formed on the medium.

In a case that one of the plurality of nozzles becomes a discharge-defect-nozzle that does not discharge the liquid droplet normally (for example, a non-discharge-nozzle that does not discharge the liquid droplet, etc.), an image defect of a streak shape may occur on the medium at a position corresponding to the discharge-defect-nozzle. In order to reduce occurrence of such image defect, it is proposed to form an image while performing correction based on a position of the discharge-defect-nozzle (Patent Literature 1). The position of the discharge-defect-nozzle is detected based on a condition of a test pattern (test chart) formed by discharging the liquid droplets from the head.

### [Citation List]

### [Patent Literature]

Patent Literature 1: International Publication No. 2018/159097

### SUMMARY

### [Technical Problem]

When an image data is generated by reading a test pattern, if the test pattern is read at lower resolution, the data volume of the image data will be smaller and subsequent processing and transmission will be easier. In this regard, Patent Literature 1 discloses an aspect in which the resolution of the reading of the test pattern by the image reading unit is lower than the resolution of the forming of the test pattern by the head unit. The Patent Literature 1 describes that "even if an image reading unit having resolution coarser than that of the head unit is used, discharge defect of a nozzle can be accurately detected".

However, the inventor of the present invention has found out that the detection accuracy of detecting of the discharge-defect-nozzle is not always sufficient in a case that the resolution of reading of the test pattern by the image reading unit is lower than the resolution of forming of the test pattern by the head unit. This is because, in a case that the resolution of the reading of the test pattern is low, the range of errors that may occur on the test pattern data generated by the reading is large, and a test pattern data that does not necessarily reflect the condition of the nozzles appropriately may be generated.

An object of the present invention is to provide a controller, an image forming system, a discharge-defect-nozzle detecting method, and a medium capable of detecting a discharge-defect-nozzle with high accuracy based on a test pattern data generated by imaging a test pattern at resolution lower than resolution at which the test pattern is formed.

### [Solution to Problem]

According to a first aspect of the present invention, there is provided a controller for an image forming system including a head in which a plurality of nozzles is formed: the controller including:
a first communication interface configured to communicate with an imaging device; and
a second communication interface configured to communicate with the head, wherein the controller is configured to:
   form a test pattern on a medium at first resolution by causing the head to discharge a liquid, via the second communication interface, the test pattern including a plurality of patterns formed respectively by the plurality of nozzles;
   obtain a plurality of test pattern data from the imaging device via the first communication interface, the plurality of test pattern data being generated by imaging, at second resolution lower than the first resolution, the test pattern formed on the medium, with the imaging device a plurality of times; and
   detect a discharge-defect-nozzle of the plurality of nozzles based on the plurality of test pattern data obtained from the imaging device.

According to a second aspect of the present invention, there is provided an image forming system including:
the controller for the image forming system of the first aspect; and
the head connected to the second communication interface.

According to a third aspect of the present invention, there is provided a discharge-defect-nozzle detecting method executed by a controller for an image forming system including a head in which a plurality of nozzles is formed, the controller including:
a first communication interface configured to communicate with an imaging device; and
a second communication interface configured to communicate with the head,
the method including:
   forming a test pattern on a medium at first resolution by causing the head to discharge a liquid, via the second communication interface, the test pattern including a plurality of patterns formed respectively by the plurality of nozzles;
   obtaining a plurality of test pattern data from the imaging device via the first communication interface, the plurality of test pattern data being generated by imaging, at second resolution lower than the first resolution, the test pattern formed on the medium, with the imaging device a plurality of times; and
   detecting a discharge-defect-nozzle of the plurality of nozzles based on the plurality of test pattern data obtained from the imaging device.

According to a fourth aspect of the present invention, there is provided a non-transitory computer-readable medium storing a program that is executable by a controller for an image forming system including a head in which a plurality of nozzles is formed: the controller including:
a first communication interface configured to communicate with an imaging device; and
a second communication interface configured to communicate with the head, wherein the program is configured to cause the controller to:
   form a test pattern on a medium at first resolution by causing the head to discharge a liquid, via the second communication interface, the test pattern including a plurality of patterns formed respectively by the plurality of nozzles;
   obtain a plurality of test pattern data from the imaging device via the first communication interface, the plurality of test pattern data being generated by imaging, at second resolution lower than the first resolution, the test pattern formed on the medium, with the imaging device a plurality of times; and
   detect a discharge-defect-nozzle of the plurality of nozzles based on the plurality of test pattern data obtained from the imaging device.

### [Advantageous Effects of Invention]

According to the controller, the image forming system, the discharge-defect-nozzle detecting method, and the medium of the present invention, it is possible to detect the discharge-defect-nozzle with high accuracy based on the test pattern data generated by imaging the test pattern at the resolution lower than the resolution at which the test pattern is formed.

### BRIEF DESCRIPTION OF DRAWINGS

FIG. 1 is a schematic configuration diagram of the printer.
FIG. 2 is a schematic configuration diagram of the printer viewed in the medium widthwise direction.
FIG. 3 is a plan view of the bottom of the head.
FIG. 4A is a schematic configuration diagram of a line sensor viewed in the conveying direction.
FIG. 4B is a schematic configuration diagram of the line sensor viewed in the medium widthwise direction.
FIG. 4C is an explanatory diagram depicting imaging elements of the line sensor and the outline of an image data composed of pixels generated by the imaging elements.
FIG. 5 is a flowchart of an image forming method including white-out correction.
FIG. 6 is a plan view depicting a shape of a test pattern along with a positional relationship with heads by which the test pattern is formed.
FIG. 7 is a plan view depicting an enlarged shape of a portion of the test pattern, along with a positional relationship with a head by which the portion of the test pattern is formed.
FIG. 8 is a plan view depicting a shape of a test pattern along with a positional relationship with heads by which the test pattern is formed.
FIG. 9 is a plan view depicting an enlarged shape of a portion of the test pattern, along with a positional relationship with a head by which the portion of the test pattern is formed.
FIG. 10 is an explanatory diagram for describing the meaning of forming of a first shift pattern and a second shift pattern.
FIG. 11A is an explanatory diagram depicting an aspect of a line of a test pattern in a case that a non-discharge-nozzle has arisen.
FIG. 11B and FIG. 11C are each an explanatory diagram depicting an aspect of a line of a test pattern in a case that a distortion-nozzle has arisen.
FIG. 11D is an explanatory diagram depicting an aspect of a line of a test pattern in a case that a deviation-nozzle has arisen.
FIG. 12 is a flowchart of a discharge-defect-nozzle detecting step.
FIG. 13 is a plan view depicting a position of a pixel-lacking-part on an image data generated by the line sensor.
FIG. 14A is an explanatory diagram depicting an aspect in which the pixel-lacking-part exists between two lines adjacent to each other.
FIG. 14B is an explanatory diagram depicting an aspect in which the line exists at the pixel-lacking-part.
FIG. 15 is a flowchart of a non-discharge-nozzle detecting step.
FIG. 16 is a flowchart of a nozzle information accumulating step.
FIG. 17 is a flowchart of a non-discharge-nozzle and/or distortion-nozzle detecting step.

### DESCRIPTION OF EMBODIMENT

### <Embodiment>

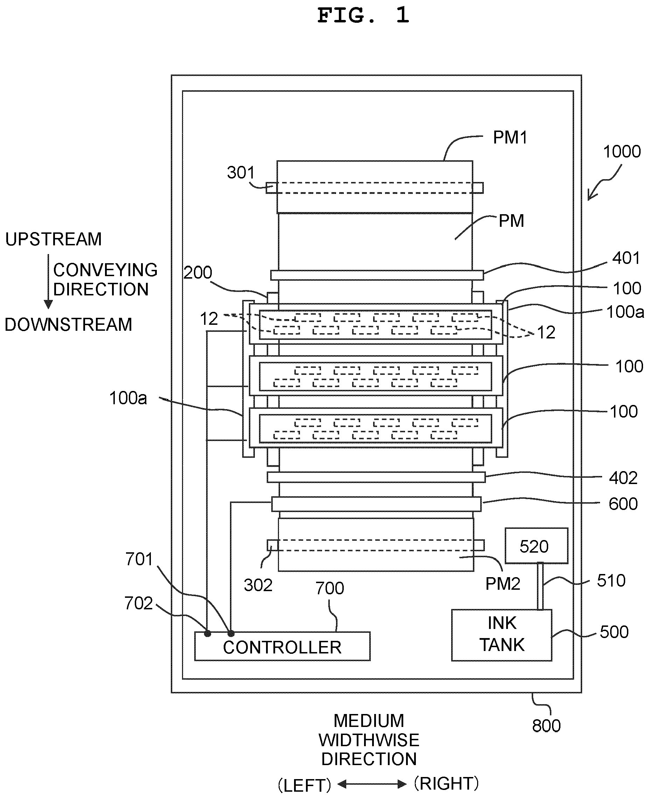

A printer (image forming system) 1000 according to the embodiment of the present invention and an image forming method using the printer 1000 will be described with reference to FIG. 1 to FIG. 17.

### [Printer 1000]

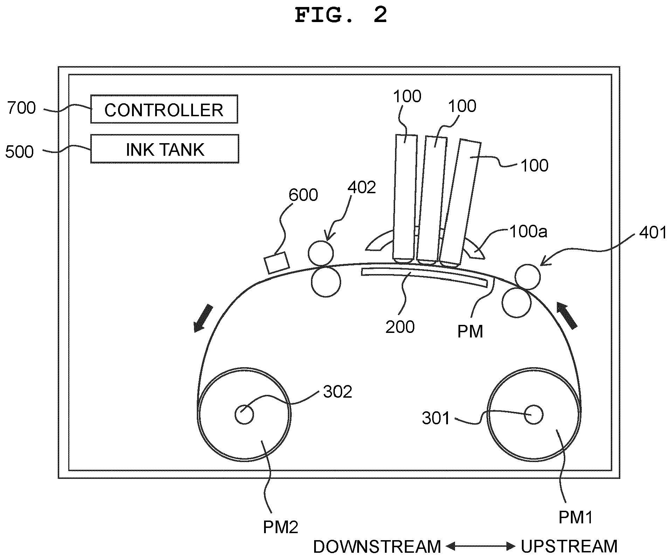

As depicted in FIG. 1 and FIG. 2, the printer 1000 mainly includes three head assemblies 100, a platen 200, a feeding shaft 301, a taking-up shaft 302, a pair of conveying rollers 401, 402, an ink tank 500, a line sensor 600, a controller 700, and a housing 800 that houses these components.

Regarding the printer 1000, the direction in which the pair of conveying rollers 401 and 402 are arranged, that is, the direction in which the medium PM is conveyed during image formation, is referred to as a conveying direction of the printer 1000. Regarding the conveying direction, the upstream and downstream of the direction in which a medium PM is conveyed are referred to as the upstream and downstream of the conveying direction, respectively. The direction which extends in the horizontal plane and which is orthogonal to the conveying direction, that is, the direction in which rotation axes of the conveying rollers 401 and 402 extend, is referred to as a medium widthwise direction. The left and right of the medium widthwise direction as seen from downstream-side of the conveying direction are referred to as the left and right of the medium widthwise direction. The medium widthwise direction is an example of the "head arrangement direction," "nozzle arrangement direction," and "element arrangement direction" of the present invention.

The three head assemblies 100 are arranged side by side in the conveying direction. Each of the three head assemblies 100 is a so-called line-type head (head bar) and is configured to discharge (eject) two types of ink.

As depicted in FIG. 1 and FIG. 2, the three head assemblies 100 are supported on an arch frame 100a that curves in arch-shape along the conveying direction. The arch frame 100a supports the three head assemblies 100 such that angles of the three head assemblies 100 with respect to the horizontal plane are different from each other.

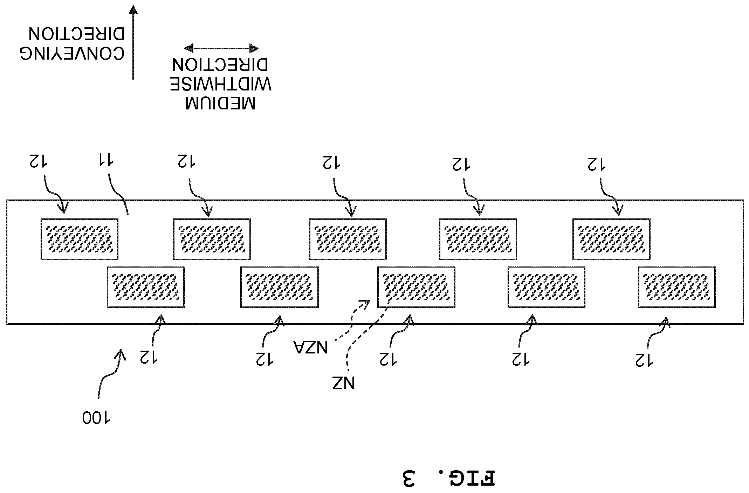

Each of the three head assemblies 100 is box-shaped. As depicted in FIG. 3, each of the three head assemblies 100 has a rectangular plate-shaped holding member 11 and ten heads 12 held by the holding member 11 at its lower end. Both ends in the longitudinal direction of the holding member 11 are supported by the arch frames 100a. The ten heads 12 are arranged in a staggered (zigzag) manner along the medium widthwise direction (head arrangement direction).

A plurality of nozzles NZ are formed on the lower surface of each of the ten heads 12. Each of the plurality of nozzles NZ is a micro-opening configured to discharge (eject) an ink to the medium PM.

Specifically, 1680 pieces of the nozzle NZ are formed in the head 12 of the embodiment. The 1680 pieces of the nozzle NZ constitute twenty-four rows of a nozzle array NZA arranged in the conveying direction, and each nozzle array NZA contains seventy nozzles NZ arranged in the medium widthwise direction (FIGs. 3, 6, and 8. Note that FIG. 3 is a simplified view and depicts only thirty-six nozzles NZ and four rows of the nozzle array NZA). In each of the nozzle array NZA, seventy nozzles NZ are formed with a pitch of approximately 508 µm (50 dpi).

The twenty-four rows of the nozzle array NZA are arranged so that the nozzle array NZA shifts to the right in the medium widthwise direction as the position shifts downstream in the conveying direction. That is, each one nozzle array NZA is positioned slightly to the right of another nozzle array NZA arranged next to and upstream of the one nozzle array NZA. As a result, the 1680 pieces of the nozzle NZ are formed, as a whole, at a pitch of approximately 21 µm (1200 dpi) in the medium widthwise direction. Therefore, resolution of forming of an image by the head 12 (first resolution) is 1200 dpi. Note that the number and arrangement of the nozzles NZ of the head 12 are arbitrary, and the number of nozzles NZ and the number, pitch, arrangement, and resolution of the nozzle array NZA described above are each merely one example.

In each of the ten heads 12, an ink distribution channel (not depicted) and a plurality of individual channels (not depicted) are formed. Each of the plurality of individual channels connects the ink distribution channel and the nozzle NZ, and has a pressure chamber (not depicted) positioned close to the nozzle NZ. A piezoelectric actuator (not depicted) is formed at a position above the pressure chamber. The piezoelectric actuator is connected to the controller 700.

The ink supplied to the head 12 from the ink tank 500 (details will be described later) is supplied to the nozzles NZ via the ink distribution channel and the individual channels. At this time, by driving the piezoelectric actuator under the control of the controller 700, the volume of the pressure chamber corresponding to the piezoelectric actuator is changed, and an ink droplet is discharged from the nozzle NZ corresponding to the pressure chamber.

The platen 200 is a plate-like member that supports the medium PM from a position below the medium PM when the ink is discharged from the head assembly 100 to the medium PM. The platen 200 faces the head assembly 100 in the up-down direction. The platen 200 is curved along the conveying direction.

The feeding shaft 301 and the taking-up shaft 302 are each a rotary shaft rotated by an undepicted motor. A feed roll PM1 in which the medium PM before image formation is wounded in roll-shape is to be attached to the feeding shaft 301. A taking-up roll PM2 in which the medium PM after image formation is wounded in a roll-shape is to be attached to the taking-up shaft 302.

The medium PM fed from the feeding roll PM1 is wound into the taking-up roll PM2 after the image formation by the head assembly 100. For example, roll paper can be used as the medium PM.

A pair of conveying rollers (conveyor) 401 and 402 is arranged such that the platen 200 is interposed between the pair of conveying rollers 401, 402 in the conveying direction. The pair of conveying rollers 401 and 402 feeds the medium PM in the conveying direction in a predetermined manner when the head assembly 100 forms an image on the medium PM.

The ink tank 500 is divided into five sections so as to store the inks of five colors (five types). The inks of five colors are sent to a reservoir 520 via a conduit 510. Each of the conduit 510 and the reservoir 520 is also divided into five sections so as to flow or store the inks of the five colors. The ink of each color sent to reservoir 520 is circulated between the reservoir 520 and one of the three head assemblies 100 via a conduit (not depicted) and a pump (not depicted).

In this embodiment, a white ink is supplied to the head assembly 100 arranged most upstream in the conveying direction. The white ink can be used for base printing. The second head assembly 100 from upstream in the conveying direction is supplied with the yellow ink and the magenta ink. The head assembly 100 arranged most downstream in the conveying direction is supplied with the cyan ink and the black ink.

The line sensor 600 is an imaging device (image pickup device, imager) that images (picks up, captures) an image formed on the medium PM by the head assembly 100. The line sensor 600 is positioned downstream in the conveying direction of the head assembly 100. In this embodiment, the line sensor 600 is a Contact Image Sensor (CIS).

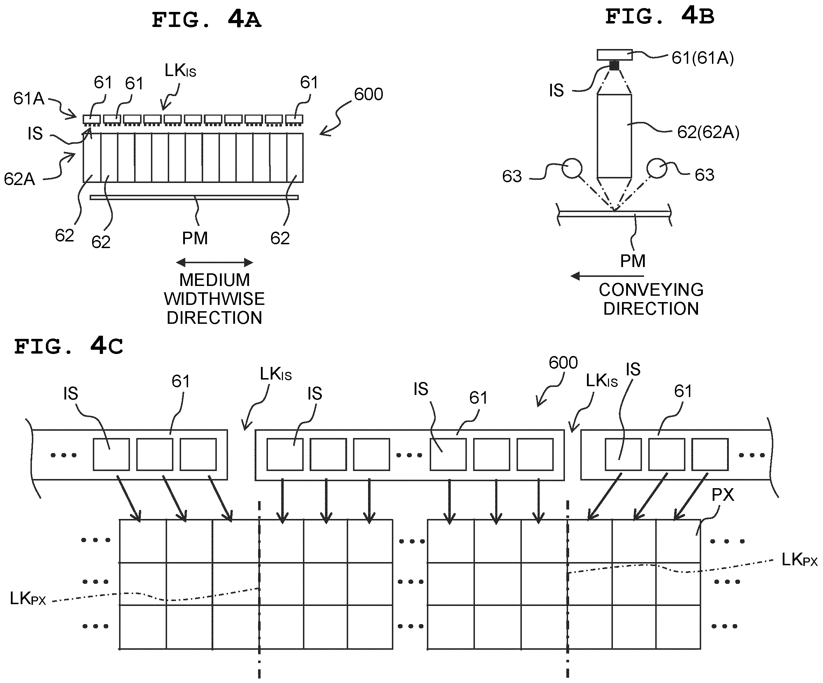

As depicted in FIG. 4A and FIG. 4B, the line sensor 600 includes a sensor IC array 61A, a rod lens array 62A, and a pair of light sources 63. The sensor IC array 61A includes a plurality of sensor ICs 61 aligned in the medium widthwise direction (element arrangement direction). The rod lens array 62A includes a plurality of rod lenses 62 aligned in the medium widthwise direction. A plurality of imaging elements (image pickup elements) IS arranged in the medium widthwise direction (element arrangement direction) is formed on the lower surface of each of the plurality of sensor ICs 61. The rod lens array 62A is positioned below the sensor IC array 61A. A pair of light sources 63 is positioned such that the rod lens array 62A is interposed between the pair of light sources 63 in the conveying direction.

As depicted in FIG. 4B, a light emitted from the pair of light sources 63 to the medium PM is reflected by the medium PM and then reaches the imaging elements IS of each of the sensor ICs 61 in the sensor IC array 61A via the rod lens array 62A. As a result, the image formed on the medium PM is captured and an image data is generated. The generated image data is sent to the controller 700.

The maximum resolution of the line sensor 600 of the embodiment is 600 dpi. That is, resolution (second resolution) of the imaging (image picking up, capturing) by the line sensor 600 is 600 dpi at maximum. In other words, the imaging elements IS of the line sensor 600 are arranged in the medium widthwise direction (element arrangement direction) at a pitch that enables imaging at the resolution of 600 dpi at maximum.

The controller 700 is connected to each part of the printer 1000, such as the head assembly 100, the conveying rollers 401, 402, and the line sensor 600. The controller 700 controls each part included in the printer 1000 as a whole.

The controller 700 includes an FPGA (Field Programmable Gate Array), an EEPROM (Electrically Erasable Programmable Read-Only Memory), a RAM (Random Access Memory), etc. The controller 700 may include a CPU (Central Processing Unit), an ASIC (Application Specific Integrated Circuit), etc. The controller 700 is connected to an external device (not depicted) such as a PC in a manner that the controller 700 and the external device can perform data communication, and controls each part of the printer 1000 based on print data sent from the external device.

The controller 700 is connected to the line sensor 600 via a first communication interface 701 and to the three head assemblies 100 via a second communication interface 702.

The controller 700 executes a recording operation and a conveying operation to form an image indicated by the printing data (received from the external device, for example a PC) on the medium PM, while moving the head 12 and the medium PM relative to each other in the conveying direction. In the recording operation, the controller 700 drives the piezoelectric actuators of each head 12 to discharge the ink from each nozzle NZ onto the medium PM. In the conveying operation, the controller 700 uses a conveying motor (not depicted) to rotate the conveying rollers 401 and 402 to convey the medium PM in the conveying direction.

### [Image forming methods]

Next, an image forming method, in which an image is formed while performing white-out correction, performed by the printer 1000 will be described.

In a case that a discharge-defective-nozzle exists in the plurality of nozzles NZ of the head 12, the quality of the image formed on the medium PM by the head 12 can deteriorate. Specifically, for example, white-out part (linear white streak) may occur in the image.

In this specification and in the present invention, "discharge-defect-nozzle" means a nozzle that is unable to discharge liquid (ink, etc.) onto a medium (paper, etc.) in a suitable manner. The discharge-defect-nozzle includes, as non-exclusive examples, a non-discharge-nozzle, a distortion-nozzle, and a deviation-nozzle.

In a case that the nozzle NZ becomes the non-discharge-nozzle, the nozzle does not discharge the liquid. Specifically, the non-discharge-nozzle may be caused, for example, by blocking totally of an opening of the nozzle NZ by the ink solidified in the head, etc. In a case that the nozzle NZ becomes the distortion-nozzle, the nozzle NZ discharges the liquid irregularly. Specifically, the distortion-nozzle may be caused, for example, by adhesion of a small particle of dust, etc. to the opening of the nozzle NZ, etc. In a case that nozzle NZ becomes the deviation-nozzle, the nozzle NZ discharges the liquid in a direction different from a direction intended by its design. Specifically, the deviation-nozzle may be caused, for example, by blocking partially of an opening of the nozzle NZ by the ink solidified in the head, etc.

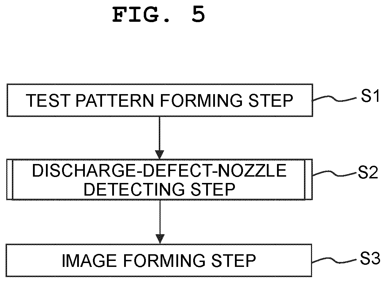

The image forming method includes, as depicted in the flowchart of FIG. 5, a test pattern forming step S1, a discharge-defect-nozzle detecting step S2, and an image forming step S3.

### [Test pattern forming step S1].

In the test pattern forming step S1, a test pattern for detecting the discharge-defect-nozzle is formed on the medium PM. Specifically, the controller 700 forms the test pattern on the medium PM by causing the head assembly 100 to discharge the ink and causing the conveying rollers 401, 402 to convey the medium PM. The controller 700 causes the head assembly 100 to discharge the ink via the second communication interface 702.

In the embodiment, the forming of the test pattern is executed twenty times in succession. That is, twenty test patterns that are identical to each other are formed on the medium PM, side by side in the conveying direction. The head assembly 100 forms each of the test patterns on the medium PM at the resolution of 1200 dpi.

Various types of patterns may be used as the test pattern. A test pattern TP1 of a first aspect and a test pattern TP2 of a second aspect will be described.

### (First aspect)

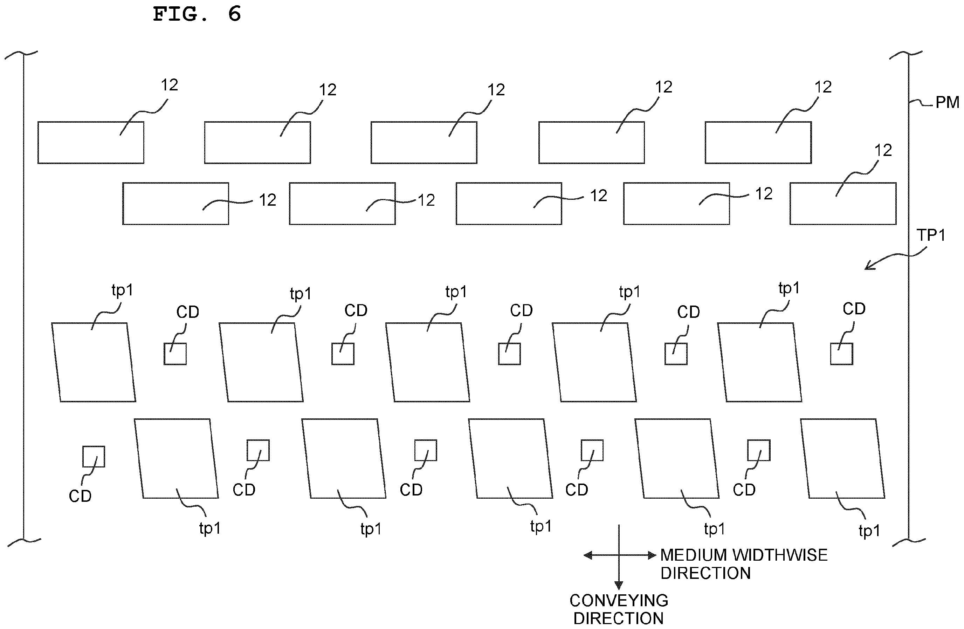

As depicted in FIG. 6, the test pattern TP 1 of the first aspect includes ten test patterns tp1 and ten information codes CD.

The ten test patterns tp1 are formed by the ten heads 12, respectively. That is, one of the heads 12 forms one of the test patterns tp1.

The ten test patterns tp 1 are identical to each other. One of the ten test patterns tp 1 will be described here. Note that the wording of "the ten test patterns tp1 are identical to each other" means that the ten test patterns tp1 are identical to each other on the print data for printing the ten test patterns tp1 (that is, in the ideal state to be printed). Therefore, the ten test patterns tp1 actually printed on the medium PM may differ slightly from each other depending on the condition of the nozzles NZ formed on each head 12.

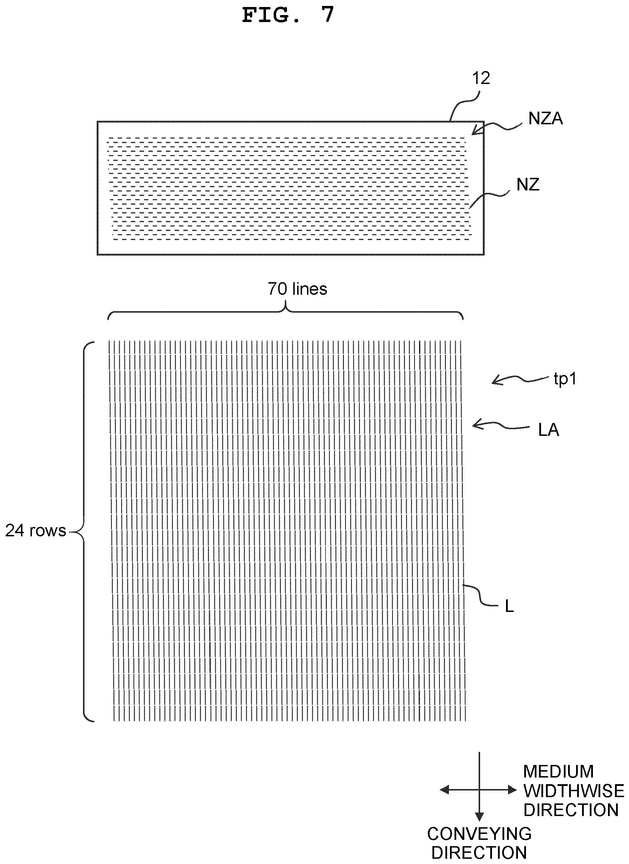

As depicted in FIG. 7, the test pattern tp1 is composed of a plurality of lines (ruled lines) L arranged in a matrix. Each of the plurality of lines L is a straight line extending along the conveying direction. In FIG. 7, twenty-four rows of a line array LA are formed in the conveying direction, each of the line arrays LA being composed of seventy lines L arranged in the medium widthwise direction. The line array LA of the n-th row (n=2, 3, ..., 24) from the upstream in the conveying direction is formed at a position shifted to the right in the medium widthwise direction relative to the line array LA of the (n-1)-th row (n=2, 3, ..., 24) from the upstream in the conveying direction. In other words, the plurality of lines L is arranged in a matrix that shifts to the right in the medium widthwise direction as it proceeds downstream in the conveying direction. Therefore, the test pattern tp1 is a substantially parallelogram in plan view.

The plurality of lines L included in the test pattern tp 1 is formed by a plurality of nozzles NZ formed in the head 12, respectively. That is, one of the lines L is formed by the ink discharged from one of the nozzles NZ.

In FIG 7, the lines L included in the same line array LA are formed by the ink discharged from the nozzles NZ included in the same nozzle array NZA. As a result, the distance between two lines L formed adjacent to each other in the nozzle arrangement direction on the medium PM does not become excessively small even in a case that the head 12 is arranged inclined to the conveying direction (that is, even in a case that the conveying direction and the nozzle arrangement direction of the nozzle array NZA are not orthogonal to each other). The line array LA of the n-th row (n=1, 2, ..., 24) from the upstream in the conveying direction is formed by the ink discharged from the nozzle array NZA of the n-th row (n=1, 2, ..., 24) from the upstream in the conveying direction.

As depicted in FIG. 6, the ten information codes CD are formed by the ten heads 12, respectively. That is, one of the heads 12 forms one of the information codes CD. One information code CD is arranged side-by-side with one test pattern tp1 in the conveying direction and positioned upstream or downstream in the conveying direction of the one test pattern tp1, the one test pattern tp1 being formed by the head 12 by which the one information code CD is formed. The information code CD is a code that holds information (a head number, a color of the ink discharged from the head, a serial number of the head, etc.) of the head 12 by which said code is formed, and is a QR Code ("QR Code" is a registered trademark of DENSO WAVE INCORPORATED.), a bar code, etc. as an example.

Looking at the test pattern TP1 as a whole, the ten test patterns tp1 are arranged in a staggered (zigzag) pattern along the medium widthwise direction. Similarly, the ten information codes CD are arranged in a staggered (zigzag) pattern along the medium widthwise direction. Each of the ten information codes CD is arranged between two test patterns tp1 adjacent to each other in the medium widthwise direction, except for the two information codes CD arranged at both ends in the medium widthwise direction.

### (Second aspect)

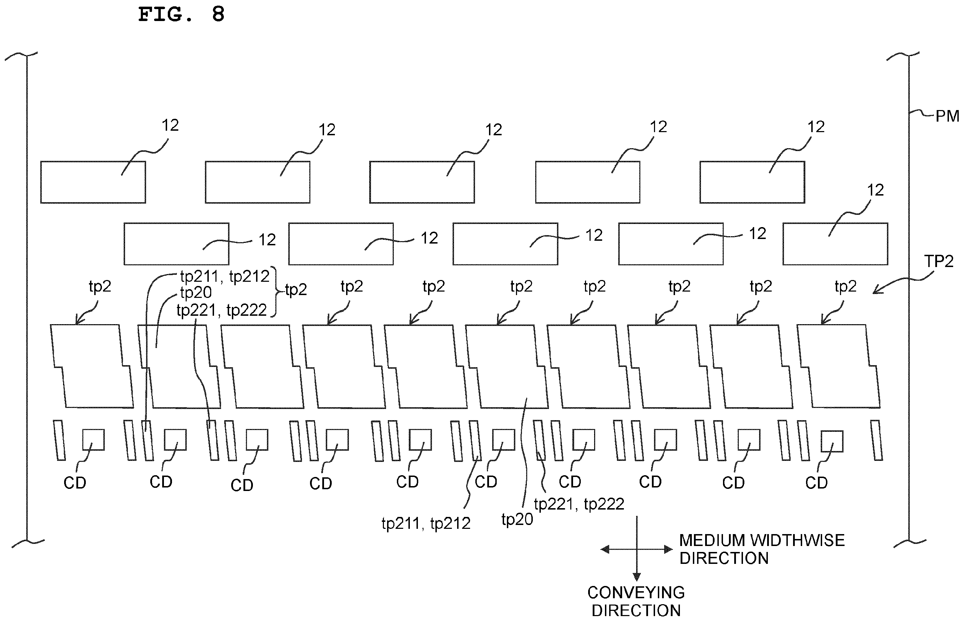

As depicted in FIG. 8, the test pattern TP2 of the second aspect includes ten test patterns tp2 and ten information codes CD.

The ten test patterns tp2 are formed by the ten heads 12, respectively. That is, one of the heads 12 forms one of the test patterns tp2.

The ten test patterns tp2 are identical to each other. One of the test patterns tp2 will be described here. Note that the wording of "the ten test patterns tp2 are identical to each other" means that the ten test patterns tp2 are identical to each other on the print data for printing the ten test patterns tp2 (that is, in the ideal state to be printed). Therefore, the ten test patterns tp2 actually printed on the medium PM may differ slightly from each other depending on the condition of the nozzles NZ formed on each head 12.

Test pattern tp2 has a configuration in which a part of the test pattern tp 1 of the first aspect (specifically, an area downstream from the center in the conveying direction of the test pattern tp 1 and near the left end in the medium widthwise direction of the test pattern tp1, and an area upstream from the center in the conveying direction of the test pattern tp 1 and near the right end in the medium widthwise direction of the test pattern tp 1) are shifted downstream in the conveying direction relative to the test pattern tp 1. A specific configuration of the test pattern tp2 is as follows.

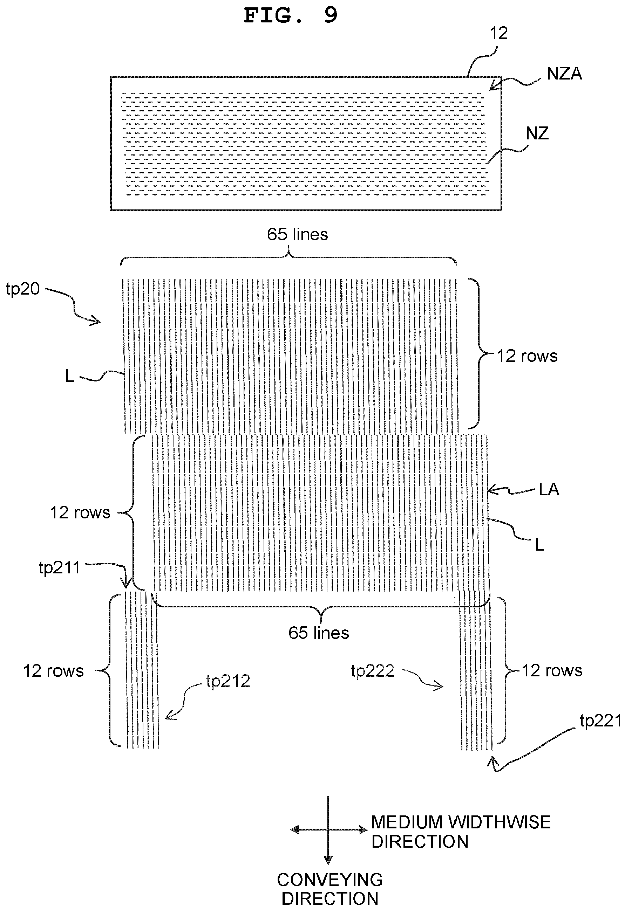

As depicted in FIGs. 8 and 9, the test pattern tp2 includes a main pattern tp20 (an example of "first pattern group," "second pattern group," and "third pattern group"); and a first shift pattern tp211, a first additional shift pattern tp212, a second shift pattern tp221, and a second additional shift pattern tp222 each arranged downstream in the conveying direction of the main pattern tp20.

The main pattern tp20 is composed of a plurality of lines L arranged in a matrix. Each of the plurality of lines L is a straight line extending along the conveying direction. In FIG. 9, twenty-four rows of a line array LA are arranged in the conveying direction, each of the line arrays LA being composed of sixty five lines L arranged in the medium widthwise direction. The line array LA of the n-th row (n=2, 3, ..., 24) from the upstream in the conveying direction is formed at a position shifted to the right in the medium widthwise direction relative to the line array LA of the (n-1)-th row (n=2, 3, ..., 24) from the upstream in the conveying direction. In other words, the plurality of lines L is arranged in a matrix that shifts to the right in the medium widthwise direction as it proceeds downstream in the conveying direction.

In FIG. 9, the lines L included in the same line array LA are formed by the ink discharged from the nozzles NZ included in the same nozzle array NZA. The line array LA of the n-th row (n=1, 2, ..., 24) from the upstream in the conveying direction is formed by the ink discharged from the nozzle array NZA of the n-th row (n=1, 2, ..., 24) from the upstream in the conveying direction.

Here, in the main pattern tp20, the lines L near the left end in the medium widthwise direction of the line arrays LA of the thirteenth (13th) to twenty fourth (24th) rows from the upstream in the conveying direction are not formed. These lines L are the lines L to be formed by the nozzles NZ up to the fifth nozzle from the left end in the medium widthwise direction in each of the nozzle arrays NZA of the thirteenth (13th) to twenty fourth (24th) rows from the upstream in the conveying direction.

On the other hand, in the first shift pattern tp211 formed downstream in the conveying direction of the main pattern tp20, twelve rows of the line L are formed in the conveying direction. The line L of the n-th (n=2, 3, ..., 12) from the upstream in the conveying direction is formed at a position shifted to the right in the medium widthwise direction relative to the line L of the (n-1)-th (n=2, 3, ..., 12) from the upstream in the conveying direction. These lines L are formed by the leftmost nozzles NZ in the medium widthwise direction of the nozzle arrays NZA of the thirteenth (13th) to twenty fourth (24th) rows from the upstream in the conveying direction. These nozzles NZ are twelve nozzles NZ of the head 12 concerned counted from the nozzle NZ farthest from a head 12 adjacent on the left to the head 12 concerned, among the twenty-four nozzles NZ positioned at the left end in the medium widthwise direction (head arrangement direction) of the head 12 concerned.

In the first additional shift pattern tp212 formed adjacent to the first shift pattern tp211 and downstream in the conveying direction of the main pattern tp20, twelve rows of the line array LA are formed in the conveying direction, each of the line array LA being composed of six lines L arranged in the medium widthwise direction. The line array LA of the n-th row (n=2, 3, ..., 12) from the upstream in the conveying direction is formed at a position shifted to the right in the medium widthwise direction relative to the line array LA of the (n-1)-th row (n=2, 3, ..., 12) from the upstream in the conveyance direction. These lines L are formed by the second (2nd) to seventh (7th) nozzles NZ from the left end in the medium widthwise direction of the nozzle arrays NZA of the thirteenth (13th) to twenty fourth (24th) rows from the upstream in the conveying direction.

That is, in the test pattern tp2, the lines L formed by the first to the fifth nozzles NZ from the left end in the medium widthwise direction of each of the nozzle arrays NZA of the thirteenth (13th) to twenty fourth (24th) rows from the upstream in the conveying direction are not formed as a part of the main pattern tp20. These lines L are formed as the first shift pattern tp211 or the first additional shift pattern tp212 at a position downstream in the conveying direction of the main pattern tp20. The lines L formed by the sixth (6th) and the seventh (7th) nozzles NZ from the left end in the medium widthwise direction of each of the nozzle arrays NZA of the thirteenth (13th) to twenty fourth (24th) rows from the upstream in the conveying direction are formed as a part of the main pattern as well as a part of the first additional shift pattern tp212.

Further, in the main pattern tp20, the lines L near the right end in the medium widthwise direction of the line arrays LA of the first (1st) to twelfth (12th) rows from the upstream in the conveying direction are not formed. These lines L are the lines L to be formed by the first to fifth nozzles NZ from the right end in the medium widthwise direction in each of the nozzle arrays NZA of the first (1st) to twelfth (12th) rows from the upstream in the conveying direction.

On the other hand, in the second shift pattern tp221 formed downstream in the conveying direction of the main pattern tp20, twelve rows of the line L are formed in the conveying direction. The line L of the n-th (n=2, 3, ..., 12) from the upstream in the conveying direction is formed at a position shifted to the right in the medium widthwise direction relative to the line L of the (n-1)-th (n=2, 3, ..., 12) from the upstream in the conveying direction. These lines L are formed by the rightmost nozzles NZ in the medium widthwise direction of the nozzle arrays NZA of the first (1st) to twelfth (12th) rows from the upstream in the conveying direction. These nozzles NZ are twelve nozzles NZ of the head 12 concerned counted from the nozzle NZ farthest from a head 12 adjacent on the right to the head 12 concerned, among the twenty-four nozzles NZ positioned at the right end in the medium widthwise direction (head arrangement direction) of the head 12 concerned.

In the second additional shift pattern tp222 formed adjacent to the second shift pattern tp221 and downstream in the conveying direction of the main pattern tp20, twelve rows of the line array LA are formed in the conveying direction, each of the line arrays LA being composed of six lines L arranged in the medium widthwise direction. The line array LA of the n-th row (n=2, 3, ..., 12) from the upstream in the conveying direction is formed at a position shifted to the right in the medium widthwise direction relative to the line array LA of the (n-1)-th row (n=2, 3, ..., 12) from the upstream in the conveyance direction. These lines L are formed by the second (2nd) to seventh (7th) nozzles NZ from the right end in the medium widthwise direction of each of the nozzle arrays NZA of the first (1st) to twelfth (12th) rows from the upstream in the conveying direction.

That is, in the test pattern tp2, the lines L formed by the first (1st) to the fifth (5th) nozzles NZ from the right end in the medium widthwise direction of each of the nozzle arrays NZA of the first (1st) to twelfth (12th) rows from the upstream in the conveying direction are not formed as a part of the main pattern tp20. These lines L are formed as the second shift pattern tp221 or the second additional shift pattern tp222 at a position downstream in the conveying direction of the main pattern tp20. The lines L formed by the sixth (6th) and the seventh (7th) nozzles NZ from the right end in the medium widthwise direction of each of the nozzle arrays NZA of the first (1st) to twelfth (12th) rows from the upstream in the conveying direction are formed as a part of the main pattern tp20 as well as a part of the first additional shift pattern tp222.

The ten information codes CD are each an information code same as or similar to the information code CD of the first aspect, and are formed by the ten heads 12, respectively. Regarding each of the ten information codes CD, one information code CD is positioned downstream in the conveying direction of the main pattern tp20 formed by the head 12 by which the one information code CD is formed. The information code CD is positioned such that the information code CD, the first shift pattern tp211, the first additional shift pattern tp212, the second shift pattern tp221, and the second additional shift pattern tp222, each formed by the identical head 12, are arranged side-by-side in the medium widthwise direction. One information code CD is positioned between the first shift pattern tp211 and the first additional shift pattern 212 each formed by the head 12 by which the one information code CD is formed and the second shift pattern tp221 and the second additional shift pattern tp222 each formed by the head 12 by which the one information code CD is formed.

Looking at the test pattern TP2 as a whole, ten main patterns tp20 are arranged in the medium widthwise direction. In addition, ten first shift patterns tp211, ten first additional shift patterns tp212, ten second shift patterns tp221, and ten second additional shift patterns tp222 are arranged in the medium widthwise direction at a position downstream in the conveying direction of the ten main patterns tp20.

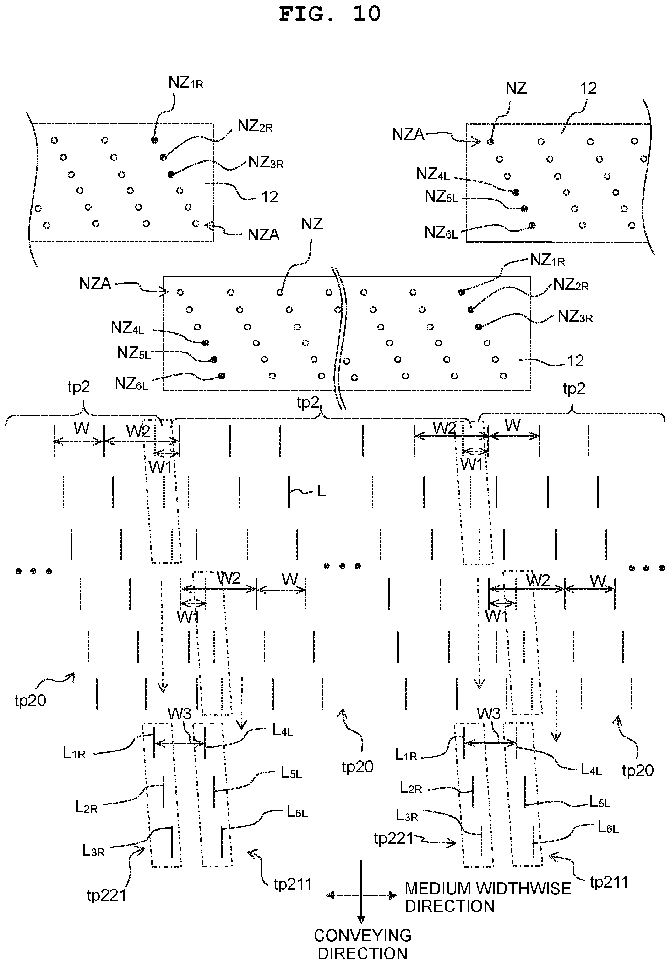

The reason why the test pattern tp2 has the first shift pattern tp211 and the second shift pattern tp221 will be described with reference to FIG. 10. To simplify the description, it is assumed in FIG. 10 that one main pattern tp20 having six rows of the line array LA, one first shift pattern tp211 having three rows of the line L, and one second shift pattern tp221 having three rows of the line L, are formed by one head 12 having six rows of the nozzle array NZA.

In FIG. 10, among the lines L of the test pattern tp2 formed by the head 12 depicted in the center of the drawing, the lines L_{4L}, L_{5L}, L_{6L} are formed, as the first shift pattern tp211, shifting downstream in the conveying direction relative to the main pattern tp20. The lines L_{4L}, L_{5L}, L_{6L} are lines formed respectively by the nozzles NZ_{4L}, NZ_{5L}, NZ_{6L} positioned at the left end of the nozzle arrays NZA of the fourth (4th), fifth (5th), and sixth (6th) rows from the upstream in the conveying direction. Further, in FIG. 10, among the lines L of the test pattern tp2 formed by the head 12 depicted in the center of the drawing, the lines L_{1R}, L_{2R}, L_{3R} are formed, as the second shift pattern tp221, shifting downstream in the conveying direction relative to the main pattern tp20. The lines L_{1R}, L_{2R}, L_{3R} are lines formed respectively by the nozzles NZ_{1R}, NZ_{2R}, NZ_{3R} positioned at the right end of the nozzle arrays NZA of the first (1st), second (2nd), and third (3rd) rows from the upstream in the conveying direction. In FIG. 10, the positions of the lines L before the shifting are indicated by dotted lines.

Among the lines L of the test pattern tp2 formed by the head 12 leftmost in the drawing (FIG. 10), the lines L_{1R}, L_{2R}, L_{3R} are formed, as the second shift pattern tp221, shifting downstream in the conveying direction relative to the main pattern tp20. The lines L_{1R}, L_{2R}, L_{3R} are lines formed respectively by the nozzles NZ_{1R}, NZ_{2R}, NZ_{3R} positioned at the right end of the nozzle arrays NZA of the first (1st), second (2nd), and third (3rd) rows from the upstream in the conveying direction. Among the lines L of the test pattern tp2 formed by the head 12 rightmost in the drawing (FIG. 10), the lines L_{4L}, L_{5L}, L_{6L} are formed, as the first shift pattern tp211, shifting downstream in the conveying direction relative to the main pattern tp20. The lines L_{4L}, L_{5L}, L_{6L} are lines formed respectively by the nozzles NZ_{4L}, NZ_{5L}, NZ_{6L} positioned at the left end of the nozzle arrays NZA of the fourth (4th), fifth (5th), and sixth (6th) rows from the upstream in the conveying direction.

As a result, the interval in the medium widthwise direction (the interval between the lines L adjacent to each other in the medium widthwise direction) between the main pattern tp20 formed by the head 12 at the left end of FIG. 10 and the main pattern tp20 formed by the head 12 in the center of FIG. 10 is an interval W2. The interval W2 is larger than the interval W1 obtained in a case that the first shift pattern tp211 and the second shift pattern tp221 are not formed. The interval W3 in the medium widthwise direction between the second shift pattern tp221 formed by the head 12 at the left end of FIG. 10 and the first shift pattern tp211 formed by the head 12 in the center of FIG. 10 (the interval between the lines L adjacent to each other in the medium widthwise direction) is larger than the interval W1.

Similarly, the interval in the medium widthwise direction (the interval between the lines L adjacent to each other in the medium widthwise direction) between the main pattern tp20 formed by the head 12 in the center of FIG. 10 and the main pattern tp20 formed by the head 12 at the right end of FIG. 10 is an interval W2. The interval W2 is larger than the interval W1 obtained in a case that the first shift pattern tp211 and the second shift pattern tp221 are not formed. The interval W3 in the medium widthwise direction between the second shift pattern tp221 formed by the head 12 in the center of FIG. 10 and the first shift pattern tp211 formed by the head 12 at the right end of FIG. 10 (the interval between the lines L adjacent to each other in the medium widthwise direction) is larger than the interval W1.

The reason why the interval W3 between the second shift pattern tp221 formed by the head 12 at the left end of FIG. 10 and the first shift pattern tp211 formed by the head 12 in the center of FIG. 10 is larger than the interval W1 is as follows. That is, regarding the head 12 at the left end of FIG. 10, the lines L_{1R}, L_{2R}, and L_{3R} is made to be the second shift pattern tp221, the lines L_{1R}, L_{2R}, and L_{3R} being formed by the nozzles NZ_{1R}, NZ_{2R}, and NZ_{3R}, among the six nozzles NZ positioned rightmost in the medium widthwise direction, of which distance in the medium widthwise direction from the head 12 in the center of the FIG. 10 is relatively large. Regarding the head 12 in the center of FIG. 10, the lines L_{4L}, L_{5L}, and L_{6L} is made to be the first shift pattern tp211, the lines L_{4L}, L_{5L}, and L_{6L} being formed by the nozzles NZ_{4L}, NZ_{5L}, and NZ_{6L}, among the six nozzles NZ positioned leftmost in the medium widthwise direction, of which distance in the medium widthwise direction from the head 12 at the left end of the FIG. 10 is relatively large. In this way, among the lines L formed at the end in the medium widthwise direction of the test pattern tp2, the lines L formed at positions relatively far from the adjacent test pattern tp2 are formed as the first shift pattern tp211 and the second shift pattern tp221. Thus, in the test patterns tp2 adjacent to each other, the interval between the first shift pattern tp211 and the second shift pattern tp221 becomes large. The above description is similarly applicable to the reason why the interval W3 between the second shift pattern tp221 formed by the head 12 in the center of FIG. 10 and the first shift pattern tp211 formed by the head 12 at the right end of FIG. 10 becomes larger than the interval W1.

The test pattern TP2 of the second aspect has the following advantageous effects.

By forming the first shift pattern tp211 and the second shift pattern tp221, as in the test pattern TP2 of the second aspect, it is possible to arrange a plurality test patterns tp2 in the medium widthwise direction and in a single row, in a state that appropriate distance is maintained between two test patterns tp2 adjacent to each other.

If the distance between the two test patterns tp2 is too small, the interval in the medium widthwise direction between the lines L becomes excessively small in the area where the two test patterns tp2 are adjacent to each other. In this case, the accuracy of detecting of the discharge-defect-nozzle may decrease in the discharge-defect-nozzle detecting step S2 described later. The decreasing of the accuracy of the detecting will be caused, for example, by the incorrect detection in which the line L included in one test pattern tp2 adjacent to the other test pattern tp2 is incorrectly detected as the line L included in the other test pattern tp2, etc.

In this regard, the test pattern TP2 of the second aspect can reduce occurrence of such incorrect detections, and can detect discharge-defect-nozzle with high accuracy.

In the test pattern TP2 of the second aspect, the dimension of test pattern TP2 in the conveying direction can be reduced by forming the plurality of test patterns tp2 side by side in the medium widthwise direction. Specifically, in the embodiment in which the head 12 includes twenty four rows of the nozzle array NZA, the test pattern tp1 includes twenty four rows of the line array LA, and the test pattern TP1 includes forty eight rows (i.e., double the number of nozzle array NZA) of the line array LA. On the other hand, both of the test pattern tp2 and test pattern TP2 include thirty six rows (i.e., 1.5 times the number of nozzle array NZA) of the line array LA. Thus, the width of the test pattern TP2 in the conveying direction is smaller than the width of the test pattern TP1 in the conveying direction by as wide as twelve rows of the line array LA. Therefore, the size (capacity) of the test pattern data obtained by imaging (capturing) the test pattern TP2 can be reduced, and the test pattern data can be transmitted to the controller 700 quickly.

In addition, the size in the conveying direction of the test pattern TP2 of the second aspect is small, and thus, in a case that the test pattern TP2 is imaged by the flatbed scanner, the necessary imaging can be performed in one or a few times. This is particularly advantageous in a case that a plurality of test patterns is formed in the test pattern forming step S1 and the plurality of test patterns is imaged in the discharge-defect-nozzle detecting step S2.

In a case that one line array LA is composed of the lines L formed by the nozzles NZ included in one nozzle array NZA, as in the test patterns tp1 and tp2 of the first and second aspects, the dimension of the test pattern formed by each head 12 in the conveying direction becomes large. This is because the number of line array LA in the test pattern is larger as compared with a case in which one line array LA is composed of the lines L formed by the nozzles NZ included in the plurality of nozzle arrays NZA. Therefore, the fact that the dimension in the conveying direction of the entire test pattern (that is, the aggregate of the plurality of test patterns formed by the plurality of heads 12) can be reduced is particularly advantageous in the aspect in which one line array LA is composed of the lines L formed by the nozzles NZ included in one nozzle array NZA.

In the test pattern TP2 of the second aspect, the first additional shift pattern tp212 is positioned adjacent to the first shift pattern tp211, and the second additional shift pattern tp222 is positioned adjacent to the second shift pattern tp221. Therefore, it is possible to calculate an inter-lines distance (details will be described later) between the lines L in the first shift pattern tp211 and the lines adjacent to them and the inter-lines distance between the lines L in the second shift pattern tp221 and the lines L adjacent to them.

In the test pattern TP2 of the second aspect, a part of the first additional shift pattern tp212 and a part of the second additional shift pattern tp222 are also formed as a part of the main pattern tp20. Therefore, in the discharge-defect-nozzle detecting step S2, the controller 700 can easily grasp corresponding relationship between the lines L formed in the main pattern tp20 and the lines L formed in each of the first shift pattern tp211, the first additional shift pattern tp212, the second shift pattern tp221, and the second additional shift pattern tp222, by using the lines L formed in the first additional shift pattern tp212 as well as the main patter tp20 and/or the lines L formed in the second additional shift pattern tp222 as well as the main pattern tp20 as the reference.

### [Discharge-defect-nozzle detecting step S2]

In the discharge-defect-nozzle detecting step S2 (FIG. 5), a discharge-defect-nozzle in the nozzles NZ of the head 12 is detected by using the test pattern formed in the test pattern forming step S1.

In detecting of the discharge-defect-nozzle performed by using the test pattern, the shapes and positions of the lines L in the test pattern are used.

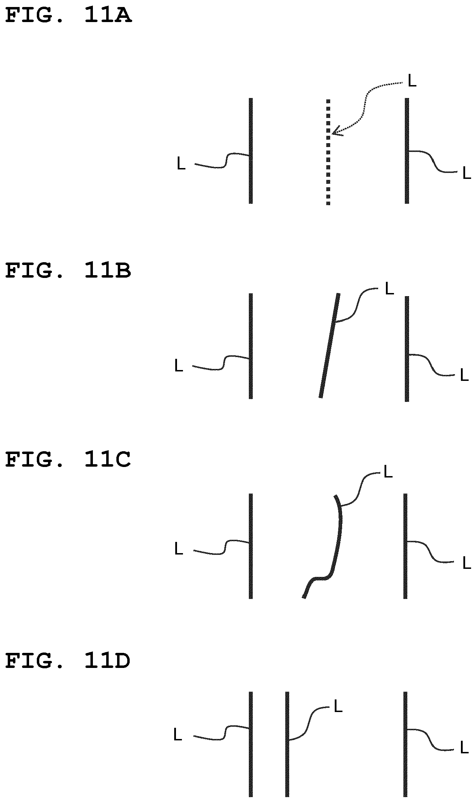

In a case that the nozzle NZ becomes the non-discharge-nozzle, no liquid is discharged from the nozzle NZ, and the line L that should have been formed by the nozzle NZ that has become the non-discharge-nozzle is not formed in the test pattern (FIG. 11A. In FIG. 11A, the line L that should have been formed by the nozzle NZ that has become the non-discharge-nozzle is indicated by a dotted line). As described above, the non-discharge-nozzle may be caused, for example, by blocking totally of an opening of the nozzle NZ by the ink solidified in the head, etc.

In a case that the nozzle NZ becomes the distortion-nozzle, the liquid is discharged from the nozzle in an irregular manner. Therefore, in the test pattern, the line L formed by the nozzle NZ that has become the distortion-nozzle is, for example, inclined (FIG. 11B) and/or distorted irregularly (FIG. 11C) with respect to the conveying direction. As described above, the distortion-nozzle may be caused, for example, by adhesion of a small particle of dust, etc. to the opening of the nozzle NZ, etc.

In a case that the nozzle NZ becomes the-deviation-nozzle, the liquid is discharged from the nozzle in a direction different from the direction intended by the design of the nozzle. Therefore, in the test pattern, the line formed by the nozzle NZ that has become the deviation-nozzle is formed at a position that is deviated, for example, in the medium widthwise direction relative to the planned position (FIG. 11D). As described above, the deviation-nozzle can be caused, for example, by blocking partially of an opening of the nozzle NZ by the ink solidified in the head, etc.

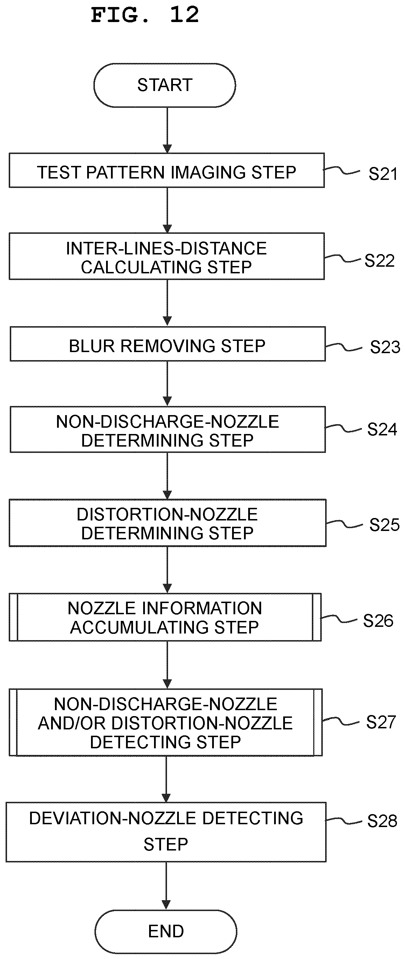

As depicted in FIG. 12, the discharge-defect-nozzle detecting step S2 includes a test pattern imaging step S21, an inter-lines distance calculating step S22, a blur removing step S23, a non-discharge-nozzle determining step S24, a distortion-nozzle determining step S25, a nozzle information accumulating step S26, a non-discharge-nozzle and/or distortion-nozzle detecting step S27, and a deviation-nozzle detecting step S28.

### [Test pattern imaging step S21].

In the test pattern imaging step S21, the controller 700 causes the line sensor 600 to image (capture) the test pattern formed on the medium PM and to generate test pattern data. The controller 700 then obtains the test pattern data generated by the line sensor 600. In this specification, "test pattern data" means image data obtained by imaging (capturing) the test pattern with an imaging device such as the line sensor 600.

The line sensor 600 images (captures) the test pattern formed by the head assembly 100 on the medium PM at a position downstream in the conveying direction of the head assembly 100. In the embodiment, the line sensor 600 continuously images twenty test patterns formed on the medium PM and arranged in the conveying direction. The line sensor 600 then generates twenty test pattern data based on the imaging. The controller 700 obtains the twenty test pattern data generated by the line sensor 600 from the line sensor 600 via the first communication interface 701.

### [Inter-lines distance calculating step S22]

In the inter-lines distance calculating step S22, the controller 700 calculates the inter-lines distance for each of the twenty test pattern data.

In the embodiment, the inter-lines distance means the distance W (FIG. 10) in the medium widthwise direction between two lines L adj acent to each other in the medium widthwise direction in each of the test patterns tp 1 and tp2. The controller 700 calculates the inter-lines distance between any two lines L adjacent to each other, for each of the twenty test pattern data.

The controller 700 corrects each of the twenty test pattern data prior to the calculating of the inter-lines distance. The details of this correction are as follows.

As depicted in FIG. 4A, the imaging elements IS of the line sensor 600 are arranged on the bottom surface of the sensor IC 61 of the sensor IC array 61A. At the position where the two sensor ICs 61 are adjacent to each other, an element-lacking-part LKis where the gap between imaging elements IS adjacent in the medium widthwise direction is large exists due to the arrangement of the imaging elements IS on the sensor IC 61.

The line sensor 600 has the element-lacking-part LKis due to its manufacturing process. The line sensor 600 includes a plurality of sensor ICs 61 as described above. One sensor IC 61 is obtained by cutting a single wafer on which two or more sensor ICs 61 are mounted by using a dicing saw or the like. When the wafer is cut, a certain amount of space is provided between the outermost imaging element IS and the outer edge of the substrate of the sensor IC 61 to prevent the outermost image pickup element IS on the sensor IC61 from being damaged by the cutting. Therefore, when manufacturing the line sensor 600 by arranging a plurality of sensor ICs 61 each obtained by cutting in an array, the distance between two imaging elements IS adjacent to each other across the boundary of two adjacent sensor ICs 61 becomes larger than the distance between two imaging elements IS adjacent to each other within the same sensor IC 61. The part where the interval between two adjacent imaging elements IS is large caused by the process described above, is the element-lacking-part LK_{IS}.

In this embodiment, a plurality of imaging elements IS is arranged on each of the sensor ICs 61 along the medium widthwise direction (element arrangement direction) at a predetermined interval (as described above, a pitch that enables imaging at the resolution of 600 dpi at the maximum). The interval between two imaging elements IS adj acent to each other across the boundary of two sensor ICs 61 adjacent to each other is larger than the predetermined interval.

FIG. 4C depicts the relationship between the plurality of imaging elements IS included in the sensor IC array 61A and the pixels PX generated by the plurality of imaging elements IS. As depicted in FIG. 4C, the plurality of imaging elements IS arranged in the medium widthwise direction generates a plurality of pixels PX arranged in the medium widthwise direction. However, no pixel is generated in the element-lacking-part LK_{IS}.

The image data generated by the imaging performed by the line sensor 600 is depicted in lower part of FIG. 4C. As depicted in FIG. 4C, the image data generated by the line sensor 600 does not include the pixel PX that should have been generated in the element-lacking-part LKis of the line sensor 600, and includes the pixels PX generated by the imaging by the sensor IC array 61A only.

Therefore, the image data generated by the line sensor 600 is the image data in which the pixels PX that should have been generated in the element-lacking-part LKis is omitted and compressed in the medium widthwise direction as much as the size of the omitted pixels. In other words, the image data generated by the line sensor 600 does not include the data (pixels) corresponding to the portion of the actual image (that is, the image formed on the medium PM) that passed through the element-lacking-part LK_{IS}, and is compressed in the medium widthwise direction by that amount. That is, it cannot be said that the image data accurately reflects the actual image.

Hereafter, the position, on the image data, corresponding to the element-lacking-part LKis (that is, the position where, assuming that the imaging element IS exists in the element-lacking-part LKis, the pixel PX generated by said imaging element IS should be inserted) is referred to as a pixel-lacking-part LK_{PX}. Since the imaging by the line sensor 600 is performed by moving the medium PM in the conveying direction with respect to the line sensor 600, the pixel-lacking-part LK_{PX} extends linearly along the conveying direction.

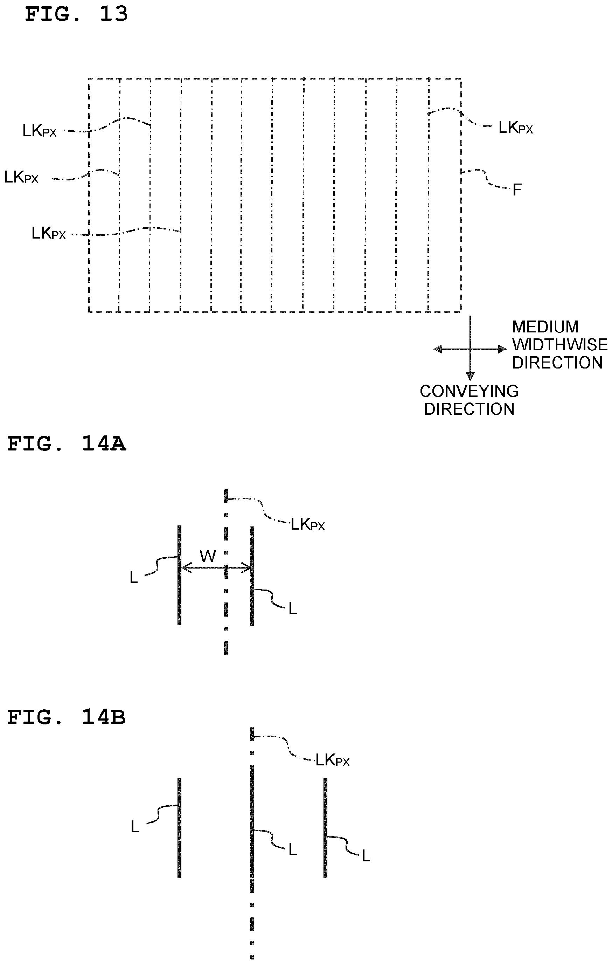

Here, the position of the element-lacking-part LKis in the sensor IC array 61A is known. Therefore, the position of the pixel-lacking-part LK_{PX} with respect to the outer frame F of the image captured by the sensor IC array 61A is also known. In the embodiment, as depicted in FIG. 13, the pixel-lacking-parts LK_{PX} exist at predetermined equal intervals from the left edge of the outer frame F.

Therefore, on the image data generated by the imaging performed by the line sensor 600, the controller 700 performs a correction in which one pixel PX is supplemented in the pixel-lacking-part LK_{PX}. As a result, on the image data generated by the line sensor 600, the positions of the lines L and the inter-lines distances each between two lines L are corrected, and the image data becomes data that accurately reflects the actual image. In this specification, the above correction is referred to as "interpolation correction" as appropriate.

As depicted in FIG. 14A, in a case that the pixel-lacking-part LK_{PK} exists between two lines L adjacent to each other on the test pattern data, the inter-lines distance on the test pattern data is smaller than the inter-lines distance on the actual test pattern as much as the size of one pixel PX (about 42 µm). Therefore, the reliability of the inter-lines distance obtained by calculation based on such test pattern data is not high.

In contrast, by performing the interpolation correction in advance, the inter-lines distance on the test pattern data accurately reflects the inter-lines distance on the actual test pattern, even in a case that the pixel-lacking -part LK_{PX} exists between two lines L adjacent to each other. Therefore, by calculating the inter-liens distance based on the test pattern data for which the interpolation correction has been performed, the inter-lines distance can be calculated with high reliability.

### [Blur removing step S23]

In the blur removing step S23, the controller 700 identifies and removes effect of the blur in the test pattern data. The controller 700 performs the blur removing step S23 for each of the twenty test pattern data.

Here, the wording of "blur" means a mixed pattern in line shape, dot shape, etc. formed at a position where the line L should not exist. Specifically, the blur may be caused, for example, by minute suspended matters such as dust in the printer 1000, etc.

The controller 700 identifies the blur based on the determination as to whether or not the inter-lines distance calculated in the inter-lines distance calculating step S22 is excessively small, the determination as to whether or not the number of the lines L in the test pattern data is appropriate, etc. In a case that the blur is identified, the controller 700 corrects the inter-lines distance calculated in the inter-lines distance calculating step S22 such that the effect of the blur is removed.

### [Non-discharge-nozzle determining step S24].

In the non-discharge-nozzle determining step S24, the controller 700 determines whether or not each of the nozzles NZ corresponding respectively to the lines L is a non-discharge-nozzle. The controller 700 performs the non-discharge-nozzle determining step S24 for each of the twenty test pattern data.

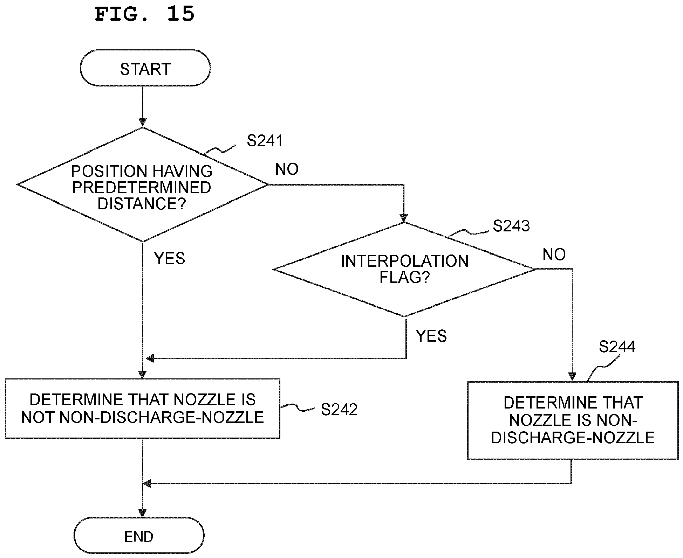

Specifically, the controller 700 performs the determination according to, for example, the flowchart in FIG. 15. The flowchart in FIG. 15 indicates the process by which the controller 700 determines, regarding a second line L adjacent on the right to a first line L in the medium widthwise direction, whether or not the nozzle NZ corresponding to the second line L is the non-discharge-nozzle.

In a step S241, the controller 700 determines whether or not the second line L is positioned at a position having a predetermined distance from the first line L. The predetermined distance is specifically the distance between the lines L formed by the nozzles NZ adjacent to each other in a single nozzle array NZA obtained in a case that the ink is discharged normally from those nozzles NZ. Therefore, the position having a predetermined distance from the first line L is the position of the second line L in a case that the ink is normally discharged from the nozzles NZ. In a case that the second line L is positioned at the position having the predetermined distance from the line L (S241: YES), the controller determines, in a step S242 that the nozzle NZ corresponding to the second line L is not the non-discharge-nozzle.

In a case that the controller 700 determines that the second line L is not positioned at the position having the predetermined distance from the first line (S241: NO), the controller 700 checks, in a step S243, whether or not an interpolation flag is set to the second line L.

The interpolation flag is a flag indicating whether or not the line L is positioned at the element-lacking-part LKis and the pixel-lacking-part LK_{PX} when the test pattern data is generated by the line sensor 600, for each of the plurality of lines L included in the test pattern data. The interpolation flag is set, for example, to the line L positioned at the pixel-lacking-part LK_{PX} on the test pattern data prior to correction in a case that the interpolation correction is performed in the inter-lines distance calculating step S22.

In a step S243, in a case that the interpolation flag is set to the second line L (S243: YES), the controller determines, in a step S242, that the nozzle NZ corresponding to the second line L is not the non-discharge-nozzle. This is because it is considered that the second line L is positioned at the element-lacking-part LKis at the time of the imaging by the line sensor 600 and is positioned in the pixel-lacking-part LK_{PX} in the test pattern data as depicted in FIG. 14B, and thus disappeared in the subsequent image processing steps; but has been properly formed on the actual test pattern. Note that the case where the interpolation flag is set is an example of "a case where an intended position on the corrected test pattern data at which the line L (pattern) formed by the nozzle (target nozzle) should exist is a position corresponding to the element-lacking-part LK_{IS}".

If the interpolation flag is not set to the second line L (S243: NO), the controller 700 determines, in a step S244, that the nozzle NZ corresponding to the second line L is the non-discharge-nozzle. Note that the case where the interpolation flag is not set is an example of "a case where an intended position on the corrected test pattern data at which the line L (pattern) formed by the nozzle (target nozzle) should exist is not a position corresponding to the element-lacking-part LK_{IS}".

### [Distortion-nozzle determining step S25].

In the distortion-nozzle determining step S25 (FIG. 12), the controller 700 determines whether each of the nozzles NZ corresponding respectively to the lines L is the distortion-nozzle (FIG. 11B, FIG. 11C) based on the test pattern data. The controller 700 performs the distortion-nozzle determining step S25 for each of the twenty test pattern data.

Specifically, for example, the controller 700 measures, for each of the lines L, the inclination with respect to the conveying direction, the variation of its position in the medium widthwise direction, etc., and if the inclination and/or the variation are/is greater than a predetermined value(s), the controller 700 determines that the nozzle NZ corresponding to said line L is the distortion-nozzle.

### [Nozzle information accumulating step S26]

As described above, the controller 700 obtains twenty test pattern data in the test pattern data imaging step S21. Thereafter, the controller 700 performs each of the inter-lines distance calculating step S22, the blur removing step S23, the non-discharge-nozzle determining step S24, and the distortion-nozzle determining step S25 for twenty test pattern data, that is, twenty times, and stores the data obtained by those steps in a memory (not depicted). The controller 700 performs the following steps using the data obtained by above steps and stored in the memory.

In the nozzle information accumulating step S26, the controller 700 accumulates information about each nozzle NZ using the determination results of the non-discharge-nozzle determining step S24 and the distortion-nozzle determining step S25 that have been executed for each of the twenty test pattern data.

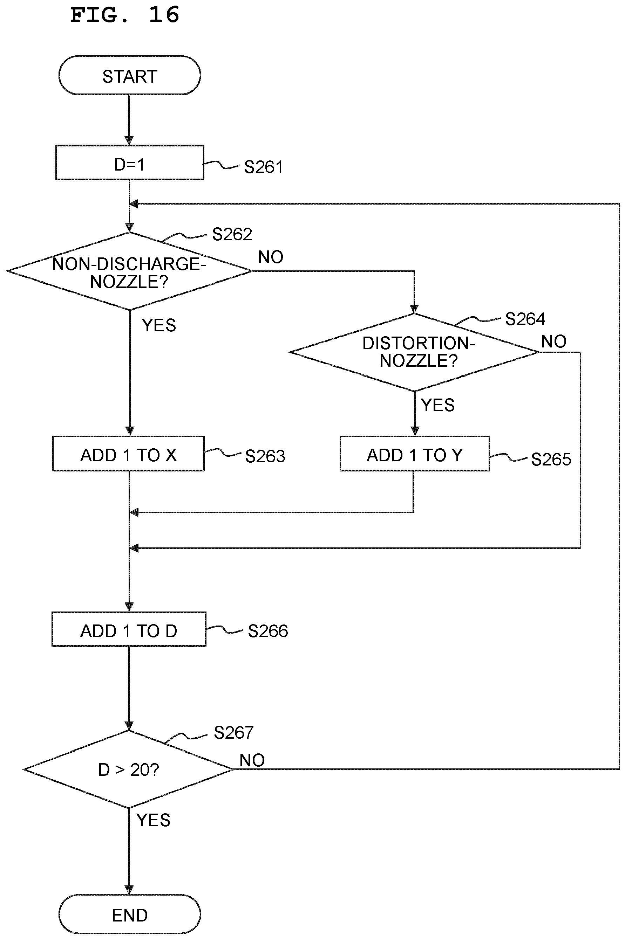

The process executed with respect to one nozzle NZ (referred to as "target nozzle" as appropriate) will be described here based on the flowchart in FIG. 16. In the nozzle information accumulating step S26, the controller 700 executes the following process for each of the plurality of nozzles NZ.

In a step S261, the controller 700 sets the data number D to "1". Then, in the step S262, the controller 700 refers to the result of the non-discharge-nozzle determining step S24 based on the D-th (here, the 1st) test pattern data. In a case that the target nozzle is determined to be the non-discharge-nozzle (S262: YES), the controller 700 adds "1" to the non-discharge-accumulation-value X (initial value is "0") in a step S263.

In a case that the target nozzle is not determined to be the non-discharge-nozzle (S262: NO), the controller 700 refers to the result of the distortion-nozzle determining step S25 based on the D-th (here the 1st) test pattern data in a step S264. If the target nozzle is determined to be the distortion-nozzle (S264: YES), the controller 700 adds " 1" to the distortion-accumulation-value Y (initial value is "0") in a step S265.

After the step S263 or the step S265, or in a case that the target nozzle is not determined to be the distortion-nozzle in the step S264 (S264: NO), controller 700 adds "1" to the data number D in the step S266. The controller 700 then determines whether or not the data number D is greater than "20" in a step S267.

If the data number D is not greater than "20" (S267: NO), the controller 700 returns the process to the step S262, and executes steps S262 to S266 with reference to the results of the non-discharge-nozzle determining step S24 and the distortion-nozzle determining step S25 based on the D-th (here, the second) test pattern data. In a case that the data number D is greater than "20" (S267: YES), the controller 700 terminates the process for said target nozzle, and executes the steps S261 to S267 with respect to the next target nozzle.

As described above, in the nozzle information accumulating step S26, the controller 700 sequentially refers to the results of the non-discharge-nozzle determining step S24 and the distortion-nozzle determining step S25 based on each of the twenty test pattern data. By doing so, the controller obtains the number of times the target nozzle is determined to be the non-discharge-nozzle (that is, non-discharge-accumulation-value X) and the number of times the target nozzle is determined to be the distortion-nozzle (that is, distortion-accumulation-value Y), each out of twenty times of the determination based respectively on the twenty test pattern data.

### [Non-discharge-nozzle and/or distortion-nozzle detecting step]

In the non-discharge-nozzle and/or distortion-nozzle detecting step S27, the controller 700 detects the non-discharging-nozzle and/or the distortion-nozzles based on the results of the nozzle information accumulating step S26.

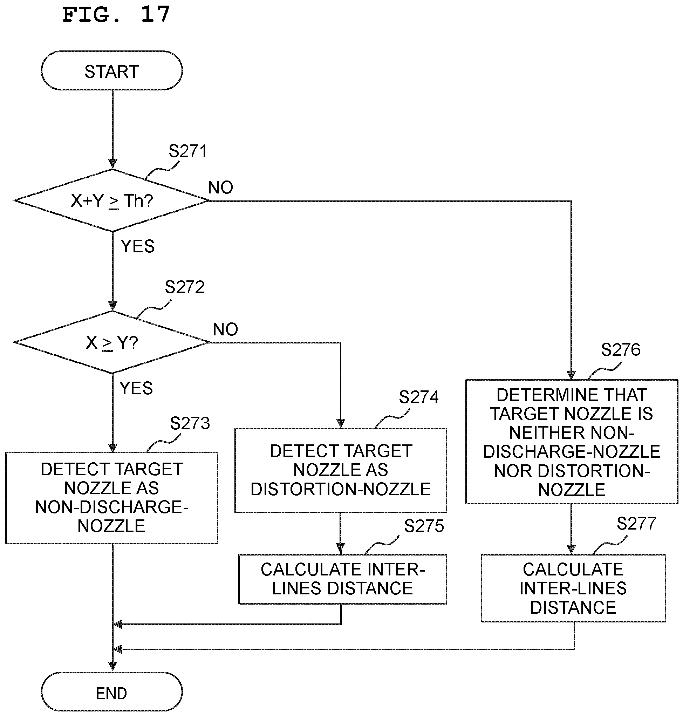

The controller 700 performs the following process depicted in FIG. 17 for each of the large number of nozzles NZ to detect non-discharge-nozzle and/or the distortion-nozzle.

The process executed with respect to one nozzle NZ ("target nozzle") is described here based on the flowchart in FIG. 17. In the non-discharge-nozzle and/or distortion-nozzle detecting step S27, the following process is executed for each of the plurality of nozzles NZ.

In the step S271, the controller 700 determines whether or not the sum of the non-discharge-accumulation-value X and the distortion-accumulation-value Y is not less than a threshold value Th, for the target nozzle. The threshold value Th is "6" in this embodiment, but is not limited to this. The threshold value Th can be any value that is not less than "1" and not more than the number of test pattern data. The smaller the threshold value, the higher the percentage that the target nozzle (objective nozzle) NZ is detected as the non-discharge-nozzle or the distortion-nozzle.

In a case that the controller 700 determines, in the step S271, that the sum of the non-discharge accumulation-value X and the distortion-accumulation-value Y is not less than the threshold value Th (S271: YES), the controller 700 determines whether or not the non-discharge-accumulation-value X is not less than the distortion-accumulation-value Y (a step S272). In a case that the non-discharge-accumulation-value X is not less than the distortion-accumulation-value Y (S272: YES), the controller 700 detects the target nozzle as the non-discharge-nozzle (the step S273).

On the other hand, in a case that the non-discharge-accumulation-value X is less than the distortion-accumulation-value Y (S272: NO), the controller 700 detects the target nozzle as the distortion-nozzle (the step S274). Then, in the step S275, the controller 700 calculates an average value of the inter-lines distance between the line L formed by the target nozzle and the line L formed by the nozzle NZ adjacent on the right to the target nozzle in the medium widthwise direction. The average value is the average value of the inter-lines distances calculated based respectively on the twenty test pattern data.

In a case that the controller 700 determines, in the step S271, that the sum of the non-discharge-accumulation-value X and the distortion-accumulation-value Y is less than the threshold value Th (S271: NO), the controller 700 determines that the target nozzle is neither the non-discharge-nozzle nor the distortion-nozzle (the step S276). Then, in a step S277, the controller 700 calculates an average value of the inter-lines distance between the line L formed by the target nozzle and the line L formed by the nozzle NZ adjacent on the right to the target nozzle in the medium widthwise direction. The average value is the average value of the inter-lines distances calculated based respectively on the plurality of data obtained by excluding the test pattern data involved in the determination that the target nozzle is the non-discharge-nozzle or the distortion-nozzle from the twenty test pattern data.

Note that the controller 700 may exclude the maximum value and the minimum value from the inter-lines distances calculated based respectively on the plurality of test pattern data, and calculate the average of the inter-lines distances from which the maximum value and the minimum value have been removed. By doing so, the average value can be calculated accurately even in a case that the inter-lines distances calculated in the plurality of test pattern data used to calculate the average value contains abnormal value(s) for some reason.

After the controller 700 detects, in the step S273, that the target nozzle is the non-discharge-nozzle, or after the controller 700 calculates, in the step S275 or the step S277, the average inter-lines distance, the controller S700 terminates the process for the current target nozzle and executes the steps S271 to S277 for the next target nozzle.

### [Deviation-nozzle detecting step S28]

In the deviation-nozzle detection process S28, the controller 700 detects the deviation-nozzle based on the average inter-lines distance calculated in the non-discharge-nozzle and/or distortion-nozzle detecting step S27.

The controller 700 determines, for each of the large number of nozzles NZ, whether or not the position of the line L formed by the nozzle concerned is shifted in the medium widthwise direction, based on the average inter-lines distance calculated in the non-discharge-nozzle and/or distortion-nozzle detecting step S27. Specifically, for example, if the inter-lines distance between the line L formed by the nozzle concerned and the line L formed by the nozzle adjacent on the left to the nozzle concerned is smaller than the inter-lines distance between the line L formed by the nozzle concerned and the line L formed by the nozzle adjacent on the right to the nozzle concerned, the controller 700 detects the nozzle concerned as the deviation-nozzle.

### [Image forming process S3].

In the image forming step S3 (FIG. 5), the controller 700 causes the head assembly 100 to discharge the ink and causes the conveying rollers 401, 402 to convey the medium PM so as to form an image on the medium PM. When forming the image, the controller 700 corrects the white-out part based on the detection result of the discharge-defect-nozzle detecting step S2.

Specifically, for example, the controller 700 identifies two nozzles NZ each adjacent to the nozzle NZ detected as the-discharge-defect-nozzle (that is, one of the non-discharge-nozzle, the distortion-nozzle, and the deviation-nozzle) in the medium widthwise direction as correction nozzles and increases the amount of the ink discharged from the correction nozzles (specifically, for example, increases the diameter of ink droplets discharged from the correction nozzles). On the other hand, the controller 700 cause the nozzle NZ detected as the discharge-defect-nozzle to stop discharging the ink. As a result, the image that should have been formed by the ink discharged from the discharge-defect-nozzle is formed by the ink discharged from the correction nozzle, and the white-out part is corrected. The controller 700 is, for example, increases the amount of the ink discharged from the correction nozzle by increasing the voltage applied to the piezoelectric actuator corresponding to the correction nozzle.

The effects of the present embodiment will be summarized below.

The controller 700 in the printer 1000 of the present embodiment causes the head assembly 100 to form twenty test patterns and obtains twenty pattern data generated by the line sensor 600. The controller 700 then detects the discharge-defect-nozzle based on the twenty test pattern data. Therefore, according to the printer 1000 of the embodiment, even in a case that the resolution of the line sensor 600 is lower than the resolution of the head assembly 100, it is possible to detect the discharge-defect-nozzle with high accuracy. This is specifically due to the following reasons.

That is, in a case that the plurality of test pattern is formed on the medium PM, and the plurality of test pattern data is generated by imaging the plurality of test pattern with the line sensor 600, the contents of the plurality of test pattern data are slightly different from each other. This is because the condition of the test pattern formed by the head assembly 100, the position of the medium PM relative to the line sensor 600 at the time of the imaging, etc. are slightly different for each of the plurality of times of the test pattern formation or each of the plurality of times of the imaging. Note that the cause of the slight difference in the position of the medium PM relative to the line sensor 600 at the time of the imaging for each of the imaging is, for example, meandering of the medium PM (deviation in the medium width direction) or fluttering of the medium PM (deviation in the direction orthogonal to the medium width direction and the conveying direction). Therefore, instead of detecting the discharge-defect-nozzle based on a single test pattern data, the controller 700 uses the plurality of test pattern data so as to detect the discharge-defect-nozzle based on a tendency that can be read out from the plurality of test pattern data. By doing so, the controller 700 can detect the discharge-defect-nozzle with high accuracy even in a case that the resolution of the line sensor 600 is lower than the resolution of the head assembly 100.

The controller 700 of the printer 1000 of the embodiment performs the detection of the discharge-defect-nozzle after obtaining the test pattern data generated by the line sensor 600 and performing the interpolation correction on the test pattern data. Therefore, according to the printer 1000 of the embodiment, the discharge-defect-nozzle can be detected with high accuracy even though the line sensor 600 having the element-lacking-part LKis is used.

As described above, the controller 700 of the printer 1000 of the embodiment causes the head assembly 100 to form twenty test patterns and obtains twenty test pattern data generated by the line sensor 600. Such aspect is advantageous, in combination with the use of the line sensor 600 having the element-lacking-part LK_{IS}, regarding the following points.

That is, because the medium PM meanders slightly when it is conveyed by the conveying rollers 401, 402, the positions of the twenty test patterns in the medium widthwise direction relative to the line sensor 600 are not necessarily identical to each other. Therefore, if the twenty test patterns are formed and the twenty test pattern data are generated, the effect of the element-lacking-part LKis (specifically, the position of the pixel-lacking-part LK_{PX}) is slightly different for each test pattern data. Therefore, as in the process of the embodiment, by using the twenty test pattern data and detecting the discharge-defect-nozzle based on whether or not the number of the test pattern data based on which the nozzle is determined to be the discharge-defect-nozzle is not less than the predetermined threshold value, the influence of the element-lacking-part LKis can be suppressed and the discharge-defect-nozzle can be detected with higher accuracy.

In addition, if the test pattern TP2 of the second aspect is used in the printer 1000 of the embodiment, as described above, the dimension of the test pattern in the conveying direction is made smaller than that of the test pattern TP 1 of the first aspect, and thus quick transfer of the test pattern data, etc. is enabled. Further, the detection of the non-discharge-nozzle using test pattern can be performed with high accuracy.

### <Modified example>

In the above embodiment, it is possible to use the modification described below.

In the test pattern tp2 of the second aspect of the above embodiment, the lines L formed as the first shift pattern tp211 and the second shift pattern tp221 can be modified as appropriate. Specifically, the modification may be, for example, as follows.

In the above embodiment, the lines L formed by twelve nozzles NZ, of the head 12 concerned, counting from the nozzle farthest from the head 12 adjacent on the left to the head 12 concerned, among the twenty-four nozzles NZ positioned at the left end in the medium widthwise direction (head arrangement direction) of the head concerned (that is, leftmost nozzle NZ of each nozzle array NZA), is formed as the first shift pattern tp211. Further, the lines L formed by twelve nozzles NZ, of the head 12 concerned, counting from the nozzle farthest from the head 12 adjacent on the right to the head 12 concerned, among the twenty four nozzles NZ positioned at the right end in the medium widthwise direction (head arrangement direction) of the head concerned (that is, rightmost nozzle NZ of each nozzle array NZA), is formed as the second shift pattern tp221.

However, there is no limitation thereto. Specifically, for example, the lines L formed by the N-th (N is even number) nozzle NZ, of the head 12 concerned, counting from the nozzle farthest from the head 12 adjacent on the left to the head 12 concerned, among the twenty-four nozzles NZ positioned at the left end in the medium widthwise direction (head arrangement direction) of the head concerned, may be formed as the first shift pattern tp211. Further, the lines L formed by the N-th (N is odd number) nozzles NZ, of the head 12 concerned, counting from the nozzle farthest from the head 12 adjacent on the right to the head 12 concerned, among the twenty four nozzles NZ positioned at the right end in the medium widthwise direction (head arrangement direction) of the head concerned, may be formed as the second shift pattern tp221.

Alternatively, assuming that N (N is a natural number not less than two) rows of the nozzle row NZA are formed in the head 12, the lines L formed by the n-pieces ("n" is a natural number not less than 1 and less than "N") of the nozzle NZ, of the head 12 concerned, counting from the nozzle farthest from the head 12 adjacent on the left to the head 12 concerned, among the N-pieces of the nozzles NZ positioned at the left end in the medium widthwise direction (head arrangement direction) of the head concerned, may be formed as the first shift pattern tp211. Further, the lines L formed by the (N-n)-pieces of the nozzle NZ, of the head 12 concerned, counting from the nozzle farthest from the head 12 adjacent on the right to the head 12 concerned, among the N-pieces of the nozzle NZ positioned at the right end in the medium widthwise direction (head arrangement direction) of the head concerned, may be formed as the second shift pattern tp221. Further, "n" may be N/2 (the half of "N").

Other than the above, the line(s) L formed by at least one nozzle NZ, of the head 12 concerned, among the plurality nozzles NZ positioned at the left end in the medium widthwise direction (head arrangement direction) of the head concerned, may be formed as the first shift pattern tp211; and the line(s) L formed by at least one nozzle NZ, of the head 12 concerned, among the plurality of nozzles NZ positioned at the right end in the medium widthwise direction (head arrangement direction) of the head concerned, may be formed as the second shift pattern tp221. Even with such aspect, the detection of the discharge-defect-nozzle can be performed with high accuracy in at least regarding the portion where the line L has been shifted. In this case, the lines L formed as the first shift pattern tp211 or the second shift pattern tp221 may be selected such that the distance between two test patterns tp2 adjacent to each other in the medium widthwise direction is larger than the distance obtained in a case that the first shift pattern tp211 and the second shift pattern tp221 are not formed, at any position of the plurality of rows of the line array LA arranged in the conveying direction.

In the test pattern tp2 of the second aspect of the above embodiment, six lines L arranged in the medium widthwise direction are formed as each of the first additional shift pattern tp212 and the second additional shift pattern tp222. However, this number may be arbitrarily modified. The first additional shift pattern tp221 and/or the second additional shift pattern tp222 may not be formed.

In the test pattern tp2 of the second aspect of the above embodiment, two lines L arranged in the medium widthwise direction are formed as the first additional shift pattern tp212 or the second additional shift pattern tp222, as well as the main pattern tp20. However, this number may be modified arbitrarily. The line(s) L that are/is formed as the first additional shift pattern tp212 or the second additional shift pattern tp222, as well as the main pattern tp20 may be omitted.

In the test pattern tp2 of the second aspect of the above embodiment, the first shift pattern tp211, the first additional shift pattern tp212, the second shift pattern tp221, and the second additional shift pattern tp222 are positioned downstream in the conveying direction of the main pattern tp20. However, those patterns may be positioned upstream in the conveying direction of the main pattern tp20.

In the main pattern tp20 of the test pattern tp2 of the above embodiment, the plurality of lines L are arranged in a matrix that shifts to the right in the medium widthwise direction as it proceeds downstream in the conveying direction. However, there is no limitation thereto. The plurality of lines L in the main pattern tp20 may be arranged in any matrix-like arrangement where each of the line array LA is shifted in the medium widthwise direction (head arrangement direction) relative to another line array LA. The matrix-like arrangement includes both an aspect in which the positions of all of the line arrays LA in the medium widthwise direction are different from each other and an aspect including, as a portion of the pattern, a plurality of line arrays LA whose positions in the medium widthwise direction are the same as each other. The modification described above is similarly applied to each of the first shift pattern tp211, the first additional shift pattern tp212, the second shift pattern tp221, and the second additional shift pattern tp222.

In the above embodiment, the test pattern may include a pattern other than line shape, such as a point pattern, instead of the line L having line shape. That is, the pattern formed by each of the plurality of nozzles NZ in a case that the test pattern is formed, is not limited to a line pattern, but may be a point pattern, etc.

In the printer 1000 of the above embodiment, the line sensor 600 may be omitted. In this case, for example, the test pattern data may be generated by reading (imaging) the test pattern with a flatbed scanner external to the printer 1000. The controller 700 may obtain the test pattern data generated by an imaging device external to the printer 1000, such as the flatbed scanner, via the first communication interface 701.

In the above embodiment and modified examples, an imaging device such as the line sensor 600, the flatbed scanner, etc. may be capable of performing imaging at resolution not lower than the resolution of the image forming performed by the head assembly 100.

The interpolation correction may be omitted in the discharge-defect-nozzle detecting step S2 of the image forming method of the above embodiment. In particular, in a case that the imaging device does not have the element-lacking-part LK_{IS}, the interpolation correction may not be performed.

In the image forming method of the above embodiment, twenty test patterns are formed on the medium PM in the test pattern forming step S1 and twenty test pattern data are generated in the test pattern imaging step S21. However, the number of the test pattern formed on the medium and the number of the test pattern data generated by the imaging of the test pattern are arbitrary. Note that, by forming not less than ten test patterns on the medium PM in the test pattern forming step S1 and generating not less than ten test pattern data in the test pattern imaging step S21, it is possible to detect the discharge-defect-nozzles with higher accuracy. It is not necessary to form the plurality of test patterns on a single medium.

In the image forming method of the above embodiment, one test pattern may be formed on the medium PM in the test pattern forming step S1, and the imaging may be repeated for a plurality of times with respect to the formed pattern so as to generate the plurality of test pattern data.

In the non-discharge-nozzle and/or distortion-nozzle detecting step S27 of the image forming method of the above embodiment, the controller 700 may detect a target nozzle as the non-discharge-nozzle based on a comparison of the non-discharge-accumulation-value X and a predetermined threshold value. The controller 700 may detect a target nozzle as the distortion-nozzle based on a comparison of the distortion-accumulation-value Y and a predetermined threshold value.

In the inter-lines distance calculating step S22 of the image forming method of the above embodiment, the controller 700 first performs the interpolation correction and then calculates the inter-lines distance. However, the controller 700 may perform the interpolation correction in parallel with the calculating of the inter-lines distance.

Specifically, for example, the controller 700 sequentially calculates the inter-lines distance between two lines L adjacent to each other while obtaining positional coordinates of the lines L on the test pattern data, starting from the line L at the left on the test pattern data. Then, in a case that the pixel-lacking-part LK_{PX} exists between one line L and the line L next to the one line L, the controller 700 corrects (shifts to the right) the positional coordinates of all of the lines L that exist on the right of the pixel-lacking-part LK_{PX}. By repeating such process, the controller 700 calculates the corrected inter-lines distances while correcting the positional coordinates of the lines L.

Alternatively, in a case that the controller 700 calculates the inter-lines distance between two lines L, the controller 700 determines whether or not the pixel-lacking-part LK_{PX} exists between the two lines L. In a case that the controller 700 determines that the pixel-lacking-pat LK_{PX} exists between the two lines L, the controller 700 adds a predetermined value (for example, a value corresponding to one pixel; about 42 µm for data imaged at the resolution of 600 dpi) to the inter-lines distance calculated based on the test pattern data.

As described above, in the interpolation correction, it is not necessary to supplement pixel(s) in the pixel-lacking-part LK_{PX} of the image data. Correcting the calculated value in view of the position of the pixel-lacking-part LK_{PX} in the calculating of the inter-lines distance, or correcting the position coordinate(s) (position information) of the line(s) L in view of the position of the pixel-lacking-part LK_{PX} are also examples of the interpolation correction.

In the discharge-defect-nozzle detecting step S2 of the above embodiment, the controller 700 uses the average value of the inter-lines distances of the plurality of test pattern data to detect the deviation-nozzle. However, there is no limitation thereto. The controller 700 may perform, for a target nozzle, determination as to whether or not the target nozzle is the deviation-nozzle based on each test pattern data by using the inter-line distance on each of the plurality of test pattern data. Then, the controller 700 may detect the target nozzle as the deviation-nozzle in a case that the number of data, among the plurality of test pattern data, based on which the target nozzle is determined to be the deviation-nozzle is not less than a predetermined threshold value.

In the discharge-defect-nozzle detecting step S2 of the above embodiment, the controller 700 detects all of the non-discharge-nozzle, the-distortion-nozzle, and the-deviation-nozzle as the discharge-defect-nozzle. However, there is no limitation thereto. In the discharge-defect-nozzle detecting step S2 of the above embodiment, the controller 700 may detect at least one of the non-discharge-nozzle, the distortion-nozzle, and the deviation-nozzle as the discharge-defect-nozzle (that is the controller 700 may detect the non-discharge-nozzle and/or the distortion-nozzle and/or the deviation-nozzle as the discharge-defect-nozzle).

The controller 700 in the printer 1000 of the above embodiment may be configured as a controller independent of the printer 1000. The controller 700 may be configured by a combination of a controller arranged in the printer 100 and a controller arranged outside the printer 1000.

A program configured to cause the controller 700 to perform at least a portion of the image forming process of the above embodiment may be stored in a non-transitory and computer-readable storage medium.

The embodiment and modified examples have been described using the case of forming the image on the medium PM by discharging the ink from the head assembly 100 as an example. The head assembly 100 may be a liquid discharging system configured to discharge any liquid for image forming, and the medium PM on which the image is to be formed may be, for example, a paper, a cloth (fabric), a resin, etc. The printer 1000 may be a printer of a serial head type.

The embodiment described herein should be considered as a non-limiting example in all aspects. For example, the number and the configuration of the head assembly 100 in the printer 1000, the number and the configuration of the head 12 in the printer 1000 may be modified. The number of colors that the printer 1000 can print simultaneously is also not limited, and the printer 1000 may be configured such that only single color printing is possible. The number and arrangement of the individual channels in the head 12 can also be modified as appropriate. In addition, the technical features described in each of the embodiment and modified examples can be combined with each other.

As long as the features of the invention are maintained, the invention is not limited to the above embodiment, and other aspect that can be considered within the scope of the technical concept of the invention are also included within the scope of the invention.

### (Additional note)

It will be understood by the one of ordinary skill in the art that the above embodiments and modifications are specific examples of the following aspects.

### (Item 1)

A controller for an image forming system including a head in which a plurality of nozzles is formed: the controller comprising:
a first communication interface configured to communicate with an imaging device; and
a second communication interface configured to communicate with the head, wherein the controller is configured to:
   form a test pattern on a medium at first resolution by causing the head to discharge a liquid, via the second communication interface, the test pattern including a plurality of patterns formed respectively by the plurality of nozzles;
   obtain a plurality of test pattern data from the imaging device via the first communication interface, the plurality of test pattern data being generated by imaging, at second resolution lower than the first resolution, the test pattern formed on the medium, with the imaging device a plurality of times; and
detect a discharge-defect-nozzle of the plurality of nozzles based on the plurality of test pattern data obtained from the imaging device.

### (Item 2)

The controller for the image forming system according to item 1, wherein the controller is configured to:
in the forming of the test pattern, form a plurality of the test pattern on the medium at the first resolution; and
in the obtaining of the plurality of test pattern data, obtain, via the first communication interface, each of the plurality of test pattern data generated respectively by imaging, at the second resolution, the plurality of the test pattern formed on the medium, with the imaging device.

### (Item 3)

The controller for the image forming system according to item 1 or 2, wherein the controller is configured to, in the detecting of the discharge-defect-nozzle:
determine whether a target nozzle, among the plurality of nozzles, is the discharge-defect-nozzle or not a plurality of times based respectively on the plurality of test pattern data; and
detect the target nozzle as the discharge-defect-nozzle in a case that the target nozzle is determined, among the determining of the plurality of times, to be the discharge-defect-nozzle for a predetermined time or more.

### (Item 4)

The controller for the image forming system according to item 3, wherein the controller is configured to, in the detecting of the discharge-defect-nozzle:
detect whether the discharge-defect-nozzle is a non-discharge-nozzle or a distortion-nozzle;
detect the target nozzle as the non-discharge-nozzle in a case that the target nozzle is determined, among the determining of the plurality of times, to be the non-discharge-nozzle or the distortion-nozzle for the predetermined time or more, and a number of time of the determining, among the determining of the plurality of times, in which the target nozzle is determined to be the non-discharge-nozzle is not less than a number of time of the determining, among the determining of the plurality of times, in which the target nozzle is determined to be the distortion-nozzle; and
detect the target nozzle as the distortion-nozzle in a case that the target nozzle is determined, among the determining of the plurality of times, to be the non-discharge-nozzle or the distortion-nozzle for the predetermined time or more, and the number of time of the determining, among the determining of the plurality of times, in which the target nozzle is determined to be the non-discharge-nozzle is less than the number of time of the determining, among the determining of the plurality of times, in which the target nozzle is determined to be the distortion-nozzle.

### (Item 5)

The controller for the image forming system according to item 3 or 4, wherein:
the first communication interface is configured to communicate with a line sensor as the imaging device, the line sensor including a plurality of imaging elements arranged along an element arrangement direction at a predetermined interval and having an element-lacking-part at which an interval between two elements, of the plurality of imaging elements, adjacent to each other is larger than the predetermined interval; and
the controller is configured to, in the detecting of the discharge defect nozzle and in a case of determining whether the target nozzle is the discharge-defect-nozzle or not the plurality of times based respectively on the plurality of test pattern data, determine the non-discharge-nozzle the plurality of times each based on one of the plurality of test pattern data, the determining of the non-discharge-nozzle including determining the target nozzle to be the non-discharge-nozzle in a case that, no pattern exists at an intended position on the one of the plurality of test pattern data at which a pattern formed by the target nozzle should exist and the intended position is not a position corresponding to the element-lacking-part.

### (Item 6)

The controller for the image forming system according to any one of items 1 to 5, wherein the controller is configured to, in the detecting of the discharge-defect-nozzle:
obtain, on each of the plurality of test pattern data, an interval between two patterns, of the plurality of patterns, adjacent to each other in a direction corresponding to a nozzle arrangement direction in which the plurality of nozzles is arranged; and
obtain an average of the interval obtained on each of the plurality of test pattern data; and
detect a deviation-nozzle based on the average of the interval.

### (Item 7)

The controller for the image forming system according to item 6, wherein:
the first communication interface is configured to communicate with a line sensor as the imaging device, the line sensor including a plurality of imaging elements arranged along an element arrangement direction at a predetermined interval and having an element-lacking-part at which an interval between two elements, of the plurality of imaging elements, adjacent to each other is larger than the predetermined interval; and
the controller is configured to:
   in the obtaining of the test pattern data, obtain the plurality of test pattern data generated by imaging each of the plurality of the test pattern with the imaging device in a state that the element arrangement direction of the line sensor and the nozzle arrangement direction are identical to each other; and
   in the detecting of the discharge-defect-nozzle and in the case of obtaining the interval on each of the plurality of test pattern data, correct a position of the plurality of patterns on each of the plurality of test pattern data based on a position of the element-lacking-part in the element arrangement direction and obtain the interval based on the corrected position of the plurality of patterns.

### (Item 8)

The controller for the image forming system according to any one of items 1 to 7, wherein the controller is configured to, in the obtaining of the test pattern data, obtain ten or more of the test pattern data generated by imaging the test pattern data with the imaging device ten times or more, as the plurality of test pattern data.

### (Item 9)

The controller for the image forming system according to any one of items 1 to 8, wherein the controller is configured to, in the forming of the test pattern on the medium, form the plurality of patterns each being a straight line.

### (Item 10)

An image forming system comprising:
the controller for the image forming system as defined in any one of items 1 to 9; and
the head connected to the second communication interface.

### (Item 11)

The image forming system according to item 10, further comprising the imaging device connected to the first communication interface.

### (Item 12)

The image forming system according to items 11, further comprising a conveyor configured to convey the medium in a conveying direction, wherein
the imaging device is arranged downstream in the conveying direction of the head.

### (Item 13)

The image forming system according to items 11 or 12, wherein a maximum resolution of the imaging device is the second resolution.

### (Item 14)

A discharge-defect-nozzle detecting method executed by a controller for an image forming system including a head in which a plurality of nozzles is formed, the controller including:
a first communication interface configured to communicate with an imaging device; and
a second communication interface configured to communicate with the head,
the method comprising:
   forming a test pattern on a medium at first resolution by causing the head to discharge a liquid, via the second communication interface, the test pattern including a plurality of patterns formed respectively by the plurality of nozzles;
   obtaining a plurality of test pattern data from the imaging device via the first communication interface, the plurality of test pattern data being generated by imaging, at second resolution lower than the first resolution, the test pattern formed on the medium, with the imaging device a plurality of times; and
   detecting a discharge-defect-nozzle of the plurality of nozzles based on the plurality of test pattern data obtained from the imaging device.

### (Item 15)

A non-transitory computer-readable medium storing a program that is executable by a controller for an image forming system including a head in which a plurality of nozzles is formed: the controller including:
a first communication interface configured to communicate with an imaging device; and
a second communication interface configured to communicate with the head, wherein the program is configured to cause the controller to:
   form a test pattern on a medium at first resolution by causing the head to discharge a liquid, via the second communication interface, the test pattern including a plurality of patterns formed respectively by the plurality of nozzles;
   obtain a plurality of test pattern data from the imaging device via the first communication interface, the plurality of test pattern data being generated by imaging, at second resolution lower than the first resolution, the test pattern formed on the medium, with the imaging device a plurality of times; and
detect a discharge-defect-nozzle of the plurality of nozzles based on the plurality of test pattern data obtained from the imaging device.

### [Reference Sings List]

12: Head
100: Head assembly
401, 402: Conveying roller
600: Line sensor
700: Controller
1000: Printer
IS: Image pickup element
L: Line
LA: Line array
LK_{IS}: Element-lacking-part
LK_{PX}: Pixel-lacking-part
NZ: Nozzle
NZANozzle: array
PM: Medium
PX: Pixel
TP1, TP2: Test pattern

## Claims

1. A controller for an image forming system including a head in which a plurality of nozzles is formed: the controller comprising:
a first communication interface configured to communicate with an imaging device; and
a second communication interface configured to communicate with the head, wherein the controller is configured to:
form a test pattern on a medium at first resolution by causing the head to discharge a liquid, via the second communication interface, the test pattern including a plurality of patterns formed respectively by the plurality of nozzles;
obtain a plurality of test pattern data from the imaging device via the first communication interface, the plurality of test pattern data being generated by imaging, at second resolution lower than the first resolution, the test pattern formed on the medium, with the imaging device a plurality of times; and
detect a discharge-defect-nozzle of the plurality of nozzles based on the plurality of test pattern data obtained from the imaging device.

2. The controller for the image forming system according to claim 1, wherein the controller is configured to:
in the forming of the test pattern, form a plurality of the test pattern on the medium at the first resolution; and
in the obtaining of the plurality of test pattern data, obtain, via the first communication interface, each of the plurality of test pattern data generated respectively by imaging, at the second resolution, the plurality of the test pattern formed on the medium, with the imaging device.

3. The controller for the image forming system according to claim 1 or 2, wherein the controller is configured to, in the detecting of the discharge-defect-nozzle:
determine whether a target nozzle, among the plurality of nozzles, is the discharge-defect-nozzle or not a plurality of times based respectively on the plurality of test pattern data; and
detect the target nozzle as the discharge-defect-nozzle in a case that the target nozzle is determined, among the determining of the plurality of times, to be the discharge-defect-nozzle for a predetermined time or more.

4. The controller for the image forming system according to claim 3, wherein the controller is configured to, in the detecting of the discharge-defect-nozzle:
detect whether the discharge-defect-nozzle is a non-discharge-nozzle or a distortion-nozzle;
detect the target nozzle as the non-discharge-nozzle in a case that the target nozzle is determined, among the determining of the plurality of times, to be the non-discharge-nozzle or the distortion-nozzle for the predetermined time or more, and a number of time of the determining, among the determining of the plurality of times, in which the target nozzle is determined to be the non-discharge-nozzle is not less than a number of time of the determining, among the determining of the plurality of times, in which the target nozzle is determined to be the distortion-nozzle; and
detect the target nozzle as the distortion-nozzle in a case that the target nozzle is determined, among the determining of the plurality of times, to be the non-discharge-nozzle or the distortion-nozzle for the predetermined time or more, and the number of time of the determining, among the determining of the plurality of times, in which the target nozzle is determined to be the non-discharge-nozzle is less than the number of time of the determining, among the determining of the plurality of times, in which the target nozzle is determined to be the distortion-nozzle.

5. The controller for the image forming system according to claim 3 or 4, wherein:
the first communication interface is configured to communicate with a line sensor as the imaging device, the line sensor including a plurality of imaging elements arranged along an element arrangement direction at a predetermined interval and having an element-lacking-part at which an interval between two elements, of the plurality of imaging elements, adjacent to each other is larger than the predetermined interval; and
the controller is configured to, in the detecting of the discharge defect nozzle and in a case of determining whether the target nozzle is the discharge-defect-nozzle or not the plurality of times based respectively on the plurality of test pattern data, determine the non-discharge-nozzle the plurality of times each based on one of the plurality of test pattern data, the determining of the non-discharge-nozzle including determining the target nozzle to be the non-discharge-nozzle in a case that, no pattern exists at an intended position on the one of the plurality of test pattern data at which a pattern formed by the target nozzle should exist and the intended position is not a position corresponding to the element-lacking-part.

6. The controller for the image forming system according to any one of claims 1 to 5, wherein the controller is configured to, in the detecting of the discharge-defect-nozzle:
obtain, on each of the plurality of test pattern data, an interval between two patterns, of the plurality of patterns, adjacent to each other in a direction corresponding to a nozzle arrangement direction in which the plurality of nozzles is arranged; and
obtain an average of the interval obtained on each of the plurality of test pattern data; and
detect a deviation-nozzle based on the average of the interval.

7. The controller for the image forming system according to claim 6, wherein:
the first communication interface is configured to communicate with a line sensor as the imaging device, the line sensor including a plurality of imaging elements arranged along an element arrangement direction at a predetermined interval and having an element-lacking-part at which an interval between two elements, of the plurality of imaging elements, adjacent to each other is larger than the predetermined interval; and
the controller is configured to:
in the obtaining of the test pattern data, obtain the plurality of test pattern data generated by imaging each of the plurality of the test pattern with the imaging device in a state that the element arrangement direction of the line sensor and the nozzle arrangement direction are identical to each other; and
in the detecting of the discharge-defect-nozzle and in the case of obtaining the interval on each of the plurality of test pattern data, correct a position of the plurality of patterns on each of the plurality of test pattern data based on a position of the element-lacking-part in the element arrangement direction and obtain the interval based on the corrected position of the plurality of patterns.

8. The controller for the image forming system according to any one of claims 1 to 7, wherein the controller is configured to, in the obtaining of the test pattern data, obtain ten or more of the test pattern data generated by imaging the test pattern data with the imaging device ten times or more, as the plurality of test pattern data.

9. The controller for the image forming system according to any one of claims 1 to 8, wherein the controller is configured to, in the forming of the test pattern on the medium, form the plurality of patterns each being a straight line.

10. An image forming system comprising:
the controller for the image forming system as defined in any one of claims 1 to 9; and
the head connected to the second communication interface.

11. The image forming system according to claim 10, further comprising the imaging device connected to the first communication interface.

12. The image forming system according to claim 11, further comprising a conveyor configured to convey the medium in a conveying direction, wherein
the imaging device is arranged downstream in the conveying direction of the head.

13. The image forming system according to claim 11 or 12, wherein a maximum resolution of the imaging device is the second resolution.

14. A discharge-defect-nozzle detecting method executed by a controller for an image forming system including a head in which a plurality of nozzles is formed, the controller including:
a first communication interface configured to communicate with an imaging device; and
a second communication interface configured to communicate with the head,
the method comprising:
forming a test pattern on a medium at first resolution by causing the head to discharge a liquid, via the second communication interface, the test pattern including a plurality of patterns formed respectively by the plurality of nozzles;
obtaining a plurality of test pattern data from the imaging device via the first communication interface, the plurality of test pattern data being generated by imaging, at second resolution lower than the first resolution, the test pattern formed on the medium, with the imaging device a plurality of times; and
detecting a discharge-defect-nozzle of the plurality of nozzles based on the plurality of test pattern data obtained from the imaging device.

15. A non-transitory computer-readable medium storing a program that is executable by a controller for an image forming system including a head in which a plurality of nozzles is formed: the controller including:
a first communication interface configured to communicate with an imaging device; and
a second communication interface configured to communicate with the head, wherein the program is configured to cause the controller to:
form a test pattern on a medium at first resolution by causing the head to discharge a liquid, via the second communication interface, the test pattern including a plurality of patterns formed respectively by the plurality of nozzles;
obtain a plurality of test pattern data from the imaging device via the first communication interface, the plurality of test pattern data being generated by imaging, at second resolution lower than the first resolution, the test pattern formed on the medium, with the imaging device a plurality of times; and
detect a discharge-defect-nozzle of the plurality of nozzles based on the plurality of test pattern data obtained from the imaging device.
